# EUROPEAN PATENT APPLICATION

(11) **EP 2 019 132 A1**
(43) Date of publication of application: **28.01.2009**
(21) Application number: 07743741.6
(22) Date of filing: 15.05.2007
(51) Int. Cl.: C10L 1/08, C10G 45/06, C10G 45/08, C10L 1/00

(54) **GAS-OIL COMPOSITION**

(30) Priority: 17.05.2006 JP 2006138355; 17.05.2006 JP 2006138356
(71) Applicant: Nippon Oil Corporation, Tokyo 105-8412 (JP)
(72) Inventor: SUGANO, Hideaki, Yokohama-shi, Kanagawa 231-0815 (JP); IGUCHI, Yasutoshi, Yokohama-shi, Kanagawa 231-0815 (JP); KOYAMA, Akira, Yokohama-shi, Kanagawa 231-0815 (JP); IKI, Hideshi, Yokohama-shi, Kanagawa 231-0815 (JP); AOKI, Yuko, Yokohama-shi, Kanagawa 231-0815 (JP)
(74) Representative: Grünecker, Kinkeldey, Stockmair & Schwanhäusser Anwaltssozietät
(86) International application number: PCT/JP2007/060307
(87) International publication number: WO 2007/132938

(57) **Abstract**

The gas oil composition of the present invention comprises a specific environment friendly base gas oil produced by contacting a feedstock containing an animal or vegetable fat and/or a component originating therefrom, with a hydrorefining catalyst containing at least one or more metals selected from the group consisting of the Groups 6A and 8 metals of the periodic table and an inorganic oxide with acidic properties, under hydrogen pressure and has a sulfur content of 5 ppm by mass or less, an oxygen content of 0.5 percent by mass or less, a cetane number of 55 or greater, an peroxide number after an accelerated oxidation test of 50 ppm by mass and the content of chain saturated hydrocarbons satisfying the requirements determined by specific relations. The gas oil composition is excellent in life cycle CO2 emission properties, fuel consumption and oxidation stability and can inhibit an engine oil from deteriorating in performances.

## Description

### [Field of the Invention]

The present invention relates to gas oil compositions comprising an environment friendly base gas oil produced from a triglyceride-containing hydrocarbon that is an animal or vegetable fat and/or a component originating therefrom, and having excellent life cycle CO₂ emission properties, fuel consumption and oxidation stability.

### [Background of the Invention]

Conventional base gas oils are known to be produced by subjecting a straight gas oil or straight kerosene, produced by atmospheric distillation of crude oil to hydrorefining or hydrodesulfurization. Conventional gas oil compositions are produced by blending one or more types of these base gas oils and base kerosenes. If necessary, these gas oil compositions are blended with a cetane number improver or a detergent (see, for example, Konishi Seiichi, "Nenryo Kogaku Gairon", Shokabo Publishing Co., Ltd., March, 1991, pages 136 to 144).

Meanwhile, in recent years, gas oil, which is a fuel for internal combustion engines has been required to be decreased in sulfur and aromatic contents in an effort to improve the air environment and reduce the environment load rapidly. At the same time, in order to cope with the global warming issue, gas oil has also been required to possess fuel properties contributive to a further improvement in fuel consumption and also effective in carbon dioxide (CO₂) reduction. As one means for achieving these objects, it has been studied to use synthetic fuels and bio diesel fuels (hereinafter referred to as "BDF"), which are reproducible energies, as alternative fuels.

Fuel currently referred to as BDF is mainly composed of a fatty acid alkyl ester mixture produced from natural animal and vegetable fats and thus contains almost no aromatic compound largely contributive to the production of soot discharged with an exhaust gas or no sulfur component giving significant influences such as poisoning of an exhaust-gas post-processing catalyst. Furthermore, BDF itself is an oxygen-containing compound having oxygen in its molecules and thus has been attracted as a dominant possibility for an alternative fuel. BDF is positioned as a reproducible energy because it is derived from plants. Thus, the carbon dioxide caused by BDF is not counted as the emissions under the carbon dioxide reduction protocol entered among nations in 1997, so-called "Kyoto Protocol", and BDF has, therefo.re, political merits.

However, fatty acid alkyl esters produced from natural animal and vegetable fats contain intrinsically a large quantity of heavy components and thus are poor in burnout properties upon combustion in engines, possibly leading to the increased emissions of unburned hydrocarbons. The fatty acid alkyl esters have such a structure that oxygen is contained in their molecules. For a fatty acid alkyl ester containing many saturated fatty acid groups, it is poor in oxidation stability due to its chemical composition, possibly leading to the deterioration of color, sludge formation, and adverse affects on engine parts. Furthermore, since it is difficult to remove sufficiently the fatty acid glycerides and alkyl alcohols, which are the raw materials for producing a fatty acid alkyl ester and the glycerin mixtures which are by-products thereof in a step following an ester-exchange reaction, a great concern has been given not only to adverse affects on engine parts and fuel injection systems but also to the likelihood that engine oil would be significantly decreased in its properties upon contact of these components therewith at lubricating parts. A fatty acid alkyl ester containing many saturated fatty acid groups in particular is poor in handling characteristics as fuel because it is solid at ambient temperatures and finds it difficult to apply the conventional prescription for securing the low-temperature properties of gas oil and to ensure low temperature fluidity because the content of single compounds will be increased.

Therefore, the use of a fatty acid alkyl ester mixture produced from natural animal and vegetable fats fails to provide a gas oil composition which is reduced in harmful exhaust components and life cycle CO₂ emissions, and improved in fuel consumption, oxidation stability, and low temperature properties. Since these engine performances are closely related to other fuel properties, it is very difficult to produce a fuel of high quality which can satisfy all of these requisite performances in a higher level. Furthermore, there has not existed any example or idea on the basis of studies of a fuel which can satisfy all the performances required for commercially available fuel oils and a realistic process for producing such a fuel.

### [Disclosure of the Invention]

The present invention was made in view of the foregoing situations and has an object to provide a gas oil composition comprising an environment friendly base gas oil produced from a triglyceride-containing hydrocarbon that is an animal or vegetable fat and/or a component originating therefrom and having excellent life cycle CO₂ emission properties, fuel consumption, oxidation stability and low-temperature startability and the capability of preventing engine oil from deteriorating.

The present invention was accomplished as the results of extensive research and study carried out to solve the above problems.

That is, according to a first aspect of the present invention, there is provided a gas oil composition comprising an environment friendly base gas oil that is a hydrocarbon-containing mixed fraction comprising 50 percent by mass or more of chain saturated hydrocarbons having 15 to 18 carbon atoms produced by contacting a feedstock containing an animal or vegetable fat and/or a component originating therefrom, with a hydrorefining catalyst containing at least one or more metals selected from the group consisting of the Groups 6A and 8 metals of the periodic table and an inorganic oxide with acidic properties, under hydrogen pressure, the base gas oil having a fatty acid alkyl ester content of 1 percent by mass or less, a free fatty acid content of 1 percent by mass or less, a total content of the metals that are sodium, potassium, calcium and magnesium of 10 ppm by mass or less, a sulfur content of 3 ppm by mass or less, an oxygen content of 1 percent by mass or less and a water content of 500 ppm by mass or less, the composition having a sulfur content of 5 ppm by mass or less, an oxygen content of 0.5 percent by mass or less, a cetane number of 55 or greater, a peroxide number after an accelerated oxidation test of 50 ppm by mass or less and satisfying the requirements defined by the following formulas:
(Formula 1) the content of the chain saturated hydrocarbons having 15 to 18 carbon atoms > 2 x the content of the chain saturated hydrocarbons having 14 or fewer carbon atoms; and
(Formula 2) the content of the chain saturated hydrocarbons having 15 to 18 carbon atoms > 3 x the content of the chain saturated hydrocarbons having 19 or more carbon atoms.

According to a second aspect of the present invention, there is provided a gas oil composition comprising an environment friendly base gas oil that is a hydrocarbon-containing mixed fraction comprising 50 percent by mass or more of chain saturated hydrocarbons having 15 to 18 carbon atoms produced by contacting a feedstock containing an animal or vegetable fat and/or a component originating therefrom, with a hydrorefining catalyst containing at least one or more metals selected from the group consisting of the Groups 6A and 8 metals of the periodic table and an inorganic oxide with acidic properties, under hydrogen pressure and simultaneously therewith or thereafter with an isomerization catalyst containing at least one or more metals selected from the Groups 6A and 8 metals of the periodic table, supported on a support containing crystalline molecular sieve, under hydrogen pressure, the base gas oil having a fatty acid alkyl ester content of 1 percent by mass or less, a free fatty acid content of 1 percent by mass or less, a total content of the metals that are sodium, potassium, calcium and magnesium of 10 ppm by mass or less, a sulfur content of 3 ppm by mass or less, an oxygen content of 1 percent by mass or less and a water content of 500 ppm by mass or less, the composition having a sulfur content of 5 ppm by mass or less, an oxygen content of 0.5 percent by mass or less, a cetane number of 55 or greater, a peroxide number after an accelerated oxidation test of 50 ppm by mass or less and satisfying the requirements defined by the following formulas:
(Formula 1) the content of the chain saturated hydrocarbons having 15 to 18 carbon atoms > 2 x the content of the chain saturated hydrocarbons having 14 or fewer carbon atoms; and
(Formula 2) the content of the chain saturated hydrocarbons having 15 to 18 carbon atoms > 3 x the content of the chain saturated hydrocarbons having 19 or more carbon atoms.

The gas oil composition according to the second aspect is preferably 0.7 or greater in a value obtained by dividing the content of the chain saturated hydrocarbons with a side chain, having 15 or more carbon atoms by the content of the straight-chain saturated hydrocarbons having 15 or more carbon atoms.

The gas oil composition according to the first or second aspect has preferably a cloud point of 0°C or lower and a kinematic viscosity at 30°C of 2 mm²/s or greater and 5 mm²/s or less.

The gas oil composition according to the first or second aspect has preferably an aromatic content of 15 percent by mass or less and a 90% distillation temperature of distillation characteristics of 280°C or higher and 350°C or lower.

The gas oil composition according to the first or second aspect is preferably produced by treating the feedstock where the animal or vegetable fat and/or a component originating therefrom contain mainly glyceride having fatty acid groups such as oleic acid and linoleic acid groups, in a total amount of 40 percent by mass or more.

The gas oil composition according to the first or second aspect is preferably produced by treating the feedstock where the animal or vegetable fat and/or a component originating therefrom contain mainly glyceride having fatty acid groups such as oleic acid, linoleic acid and palmitic acid groups, in a total amount of 80 percent by mass or more.

### [Best Mode of Carrying out the Invention]

The present invention will be described in more detail below.

Used as a component of the gas oil composition according to the first aspect of the present invention is an environment friendly base gas oil that is a hydrocarbon-containing mixed fraction comprising 50 percent by mass or more of chain saturated hydrocarbons having 15 to 18 carbon atoms, produced by contacting a feedstock containing an animal or vegetable fat and/or a component originating therefrom, with a hydrorefining catalyst containing at least-one or more metals selected from the group consisting of the Groups 6A and 8 metals of the periodic table and an inorganic oxide with acidic properties, under hydrogen pressure, and having a fatty acid alkyl ester content of 1 percent by mass or less, a free fatty acid content of 1 percent by mass or less, a total content of the metals that are sodium, potassium, calcium and magnesium of 10 ppm by mass or less, a sulfur content of 3 ppm by mass or less, an oxygen content of 1 percent by mass or less and a water content of 500 ppm by mass or less.

Used as a component of the gas oil composition according to the second aspect of the present invention is an environment friendly base gas oil that is a hydrocarbon-containing mixed fraction comprising 50 percent by mass or more of chain saturated hydrocarbons having 15 to 18 carbon atoms, produced by contacting a feedstock containing an animal or vegetable fat and/or a component originating therefrom, with a hydrorefining catalyst containing at least one or more metals selected from the group consisting of the Groups 6A and 8 metals of the periodic table and an inorganic oxide with acidic properties, under hydrogen pressure and simultaneously therewith or thereafter with an isomerization catalyst containing at least one or more metals selected from the Groups 6A and 8 metals of the periodic table, supported on a support containing crystalline molecular sieve, under hydrogen pressure, and having a fatty acid alkyl ester content of 1 percent by mass or less, a free fatty acid content of 1 percent by mass or less, a total content of the metals that are sodium, potassium, calcium and magnesium of 10 ppm by mass or less, a sulfur content of 3 ppm by mass or less, an oxygen content of 1 percent by mass or less and a water content of 500 ppm by mass or less.

The environment friendly base gas oil is a low sulfur content gas oil fraction or kerosene fraction produced by hydrotreating a specific feedstock, or a mixture thereof.

The feedstock is necessarily an animal or vegetable fat or a component originating therefrom. Examples of the animal or vegetable fat or the component originating therefrom used herein include natural or artificially made or produced animal or vegetable fats, animal or vegetable fat components and components made or produced from these fats. Examples of raw materials of the animal fats and animal oils include beef tallow, milk fat (butter), lard, mutton tallow, whale oil, fish oil, and liver oil. Examples of raw materials of the vegetable fats and vegetable oils include the seeds and other parts of coconut, palm-tree, olive, safflower, rape (rape blossoms), rice bran, sunflower, cotton seed, corn, soy bean, sesame, and flaxseed. The use of fats and oil other than these would not create any problem. The feedstocks may be of solid or liquid but are preferably produced from vegetable fats or vegetable oils with the objective of easy handling, carbon dioxide absorptivity, and high productivity. Alternatively, waste oils resulting from the use of these animal and vegetable oils for household, industry and food preparation purposes may be used as the feedstock after the residual matters are removed from these oils. Components originating from chemical products such as plastics or solvents also may be used as the feedstock after the residual matters are removed from these oils.

Examples of the typical composition of the fatty acid part of the glyceride compounds contained in these feedstocks include fatty acids, so-called saturated fatty acids having no unsaturated bond in the molecules, such as butyric acid (C₃H₇COOH), caproic acid (C₅H₁₁COOH), caprylic acid (C₇H₁₅COOH) , capric acid (C₉H₁₉COOH), lauric acid (C₁₁H₂₃COOH), myristic acid (C₁₃H₂₇COOH), palmitic acid (C₁₅H₃₁COOH), stearic acid (C₁₇H₃₅COOH), and so-called unsaturated fatty acids having one or more unsaturated bonds in the molecules, such as oleic acid (C₁₇H₃₃COOH), linoleic acid (C₁₇H₃₁COOH), linolenic acid (C₁₇H₂₉COOH) and ricinoleic acid (C₁₇H₃₂ (OH) COOH). In general, the hydrocarbon parts of these fatty acids contained in substances existing in nature are mostly of straight chain. However, the fatty acid may be any of those having a side chain structure, i.e., isomers as long as the properties defined by the present invention are satisfied. The unsaturated fatty acid may be any of those existence of which are generally recognized in nature as well as those having an unsaturated bond per molecule, the position of which is adjusted through chemical synthesis as long as the properties defined by the present invention are satisfied.

The above-described feedstocks (animal or vegetable fats and components originating therefrom) contain one or more of these fatty acids, which vary depending on the raw materials. For example, coconuts oil contains a relatively large amount of saturated fatty acid groups such as lauric acid and myristic acid groups while soy bean oil contains a large amount of unsaturated fatty acid groups such as oleic acid and linoleic acid groups.

The feedstocks are preferably animal or vegetable fats and/or-components originating therefrom, containing mainly glyceride having fatty acid groups such as oleic acid and linoleic acid groups, in a total amount of 40 percent by mass or more or animal, or vegetable fats and/or components originating therefrom, containing mainly glyceride having fatty acid groups such as oleic acid, linoleic acid and palmitic acid groups, in a total amount of 80 percent by mass or more. Feedstocks if satisfying these requirements can improve the life cycle carbon dioxide reducing properties of the resulting composition and renders it possible to produce an environment friendly base gas oil more easily. Typical examples of vegetable oils having such properties include palm oil, rape oil and soy bean oil.

The feedstock contains preferably a fraction whose boiling point is 250°C or higher, more preferably a fraction whose boiling point is 300°C or higher, more preferably a fraction whose boiling point is 360°C or higher. If the feedstock contains no fraction whose boiling point is 250°C or higher, the yield of a liquid product would be decreased due to an increase in gas formed during the production, possibly resulting in an increase in life cycle carbon dioxide.

Alternatively, the feedstock may be a mixture of an animal or vegetable fat and a component originating therefrom, with a petroleum hydrocarbon fraction. When the feedstock is such a mixture, the ratio of the petroleum hydrocarbon fraction is preferably from 10 to 99 percent by volume, more preferably from 30 to 99 percent by volume, more preferably from 60 to 98 percent by volume, of the total volume of the feedstock. If the ratio is less than the lower limit, there may arise the necessity of facilities for disposal of by-produced water. If the ratio exceeds the upper limit, it is not preferable in view of life cycle carbon dioxide reduction.

Examples of the petroleum hydrocarbon fraction include straight gas oil produced by an atmospheric distillation unit for crude oil; vacuum gas oil produced by treating straight heavy oil or residue from an atmospheric distillation unit, in a vacuum distillation unit; catalytically cracked or hydrotreated gas oil produced by catalytic cracking or hydrotreating vacuum heavy gas oil or desulfurized fuel oil; and hydrorefined or hydrodesulfurized gas oil produced by hydrorefining any of these petroleum hydrocarbons. Preferred are heavy straight gas oil and vacuum gas oil in view of life cycle carbon dioxide reduction.

Hydrotreating of the feedstock are carried out preferably under conditions where the hydrogen pressure is in the range of 2 to 13 MPa, the liquid hourly space velocity (LHSV) is in the range of 0.1 to 3.0 h⁻¹ and the hydrogen/oil pressure is in the range of 150 to 2000 NL/L, more preferably under conditions where the hydrogen pressure is in the range of 3 to 12 MPa, the liquid hourly space velocity is in the range of 0.2 to 2.8 h⁻¹, and the hydrogen/oil ratio is in the range of 200 to 1800 NL/L, more preferably under conditions where the hydrogen pressure is in the range of 4 to 11 MPa, the liquid hourly space velocity is in the range of 0.3 to 2.7 h⁻¹, and the hydrogen/oil ratio is in the range of 300 to 1600 NL/l. Each of the conditions is a factor exerting an influence on the reaction activity. For example, if the hydrogen pressure and hydrogen/oil ratio are less than the lower limits, the reactivity tends to reduce, and the activity tends to reduce rapidly. If the hydrogen pressure and hydrogen/oil ratio exceed the upper limits, an enormous plant investment for a compressor may be required. Lower liquid hourly space velocity tends to be more advantageous for the reactions. However, if the liquid hourly space velocity is lower than the lower limit, an enormous plant investment for construction of a reactor with an extremely large volume may be required. If the liquid hourly space velocity exceeds the upper limit, the reaction tends to proceed insufficiently.

The reactor may be of a fixed bed mode. That is, supply of hydrogen to the feedstock may be carried out in the form of counter flow or parallel flow. Alternatively, counter flow and parallel flow may be combined in a plurality of reactors. The supply mode of the feedstock is generally down flow. Gas-liquid cocurrent flow may be employed. The reactor may be a single reactor or a combination of a plurality of reactors. A single reactor with the interior segmented into a plurality of catalyst beds may also be employed. In the present invention, the distillate hydrorefined in the reactor is fractionated into predetermined fractions through gas-liquid separation and rectification. Thereupon, if moisture is produced in associated with the reaction and the sulfur components are contained in the oil to be treated, hydrogen sulfide may be generated. Therefore, a gas-liquid separation device or any other by-produced gas removal device may be installed between the plurality of reactors or in the product recovering step.

Hydrogen is generally introduced into a first reactor via its inlet, accompanying the feedstock, before or after the feedstock passes through a heating furnace. Alternatively, hydrogen gas may be introduced from the spaces between the catalyst beds or between a plurality of reactors for the purposes of controlling the temperature in the reactors and maintaining the hydrogen pressure over the whole reactors. Hydrogen to be introduced in such a manner is referred to as "quenching hydrogen". The ratio of the quenching hydrogen to the hydrogen introduced, accompanying the feedstock is preferably from 10 to 60 percent by volume, more preferably from 15 to 50 percent by volume. The ratio of less than the lower limit would cause a tendency that the reaction at reaction sites in the subsequent stages does not proceed sufficiently. The ratio in excess of the upper limit would cause a tendency that the reaction near the inlet of the reactor does not proceed sufficiently.

In the present invention, the feedstock may be treated with a single hydrorefining catalyst or a double-layered hydrorefining catalyst. The double-layered catalyst is used in order to decrease the oxygen and sulfur contents of a distillated oil with the first stage catalyst (pre-treatment catalyst) and produce some fraction through cracking reaction with the second stage catalyst. The volume of each of the first stage catalyst and second stage catalysts may be arbitrarily determined. For the double-layered catalyst, the ratio of the first stage catalyst volume to the total hydrorefinig catalyst volume is preferably from 10 to 90 percent by volume, more preferably from 25 to 75 percent by volume. If the ratio is less than the lower limit, the oxygen content of the distillate treated with the first stage catalyst could not be reduced sufficiently. If the ratio is more than the upper limit, the reaction would not proceed sufficiently.

The oxygen content of the distillate having been treated with the first stage catalyst is preferably 40 percent by mass or less, more preferably 30 percent by mass or less, of that of the feedstock. The oxygen components contained in the distillate contacted with the hydrorefining catalyst poison the catalyst active sites thereof. Therefore, if the oxygen content of the distillate after being contacted with the first stage catalyst exceeds 40 percent by mass, an sufficient activity would not be attained.

If necessary, in addition to the first stage and second stage catalysts, a guard catalyst, a demetallization catalyst, and an inert filler may be used alone or in combination for the purposes of trapping scale fractions flowing into the reactor, accompanied with the feedstock and supporting the first stage and second stage catalysts at portions segmenting the catalyst beds. Furthermore, a catalyst having a hydrogenation activity in a further subsequent layer of the second stage catalyst may be used for the purposes of hydrostabilizing decomposition products.

The hydrorefining catalyst and pre-treatment catalyst contain at least one metal, preferably two or more metals selected from the Groups 6A and 8 metals of the periodic table, as an active metal. Example of such metals include Co-Mo, Ni-Mo, Ni-Co-MO, and Ni-W. Upon pre-treatment for hydrorefining, these metals are converted to be in the form of sulfides before being used.

Regarding a method of supplying a sulfur compound required for converting these metals in the form of sulfides, there may be assumedly exemplified a method wherein a sulfur compound is supplied from a base gas oil containing a sulfur-containing hydrocarbon compound in a relatively high concentration, contained in the feedstock, a method wherein a sulfur-containing hydrocarbon compound is used in the form of a mixture with the feedstock, or a method wherein hydrogen sulfide gas is recycled in the feedstock. Examples of the sulfur-containing hydrocarbon compound referred herein include sulfide, disulfide, polysulfide, thiol, thiophene, benzothiophene, dibenzothiophene, and derivatives thereof. The sulfur-containing hydrocarbon compound may be a single compound or a mixture of two or more types of these compounds.

When the sulfur content of the feedstock can be adjusted to 10 ppm by mass or less, at least one type of metal selected from the Group 8 metals of the periodic table may be used. Such a metal is preferably at least one type selected from Ru, Rd, Ir, Pd and Pt, more preferably Pd and/or Pt. The active metal may be a combination of these metals, such as Pt-Pd, Pt-Rh, Pt-Ru, Ir-Pd, Ir-Rh, Ir-Ru, Pt-Pd-Rh, Pt-Rh-Ru, Ir-Pd-Rh, and Ir-Rh-Ru.

The support of the hydrorefining and pre-treatment catalysts is a porous inorganic oxide. The support is generally an alumina-containing porous inorganic oxide. Examples of other components constituting the support include silica, titania, zirconia, boria, silicon and magnesium. The support is preferably a composite oxide containing alumina and at least one or more components selected from the other constituting components. The support may further contain phosphorus in addition to these components. The total content of the components other than alumina is preferably from 1 to 20 percent by mass, more preferably 2 to 15 percent by mass. If the total content is less than 1 percent by mass, the resulting catalyst fails to obtain a sufficient catalytic surface area and thus would be reduced in activity. If the total content is more than 20 percent by mass, the acidic properties of the support is increased, possibly leading to a reduction in activity caused by the formation of coke. When phosphorus is contained as a support constituting component, the content of phosphorus is from 1 to 5 percent by mass, more preferably from 2 to 3.5 percent by mass in terms of oxide.

There is no particular restriction on the raw materials which are precursors of silica, titania, zirconia, boria, silicon and magnesium. Therefore, a solution containing silicon, titanium, zirconium, or boron is generally used. For silicon, silicic acid, sodium silicate, and silica sol may be used. For titanium, titanium sulfate, titanium tetrachloride, and various alkoxide salts may be used. For zirconium, zirconium sulfate and various alkoxide salts may be used. For boron, boric acid may be used. For phosphorus, phosphoric acid and alkali metal salts thereof may be used.

The raw materials of these support constituting components other than alumina are preferably added at any stage prior to calcination of the support. For example, the raw materials may be added to an aluminum aqueous solution which is then formed into an aluminum oxide gel containing these support constituting components, or may be added to a prepared aluminum oxide gel. Alternatively, the raw materials may be added at a step of kneading a mixture of water or an acid aqueous solution and a commercially available alumina intermediate or boehmite powder. Preferably, these support constituting components are contained in an aluminum oxide gel during the process of preparation thereof. Although the mechanism exhibiting advantageous effects attained by addition of these support constituting components other than alumina has not been elucidated, it is assumed that these components form a complex oxide state together with aluminum. It is thus presumed that this increase the surface area of the support and cause some interaction with the active metals, thereby giving influences to the activity of the catalyst.

The total supported amount of the active metals, for example, W and Mo is preferably from 12 to 35 percent by mass, more preferably from 15 to 30 percent by mass, in terms of oxide, of the catalyst mass. If the amount is less than the lower limit, the catalytic activity would be reduced because the number of active sites is reduced. If the amount is more than the upper limit, the metals fail to disperse effectively, possibly leading to a reduction in catalytic activity. The total supported amount of Co and Ni is preferably from 1.5 to 10 percent by mass, more preferably from 2 to 8 percent by mass, in terms of oxide, of the catalyst mass. If the amount is less than 1.5 percent by mass, a sufficient co-catalytic effect can not be attained, possibly leading to a reduction in catalytic activity. If the amount is more than 10 percent by mass, the metals fail to disperse effectively, possibly leading to a reduction in catalytic activity.

The pre-treatment catalyst contains at least one metal and preferably two or more metals selected from the Groups 6A and 8 metals of the periodic table. Examples of these metals include Co-Mo, Ni-Mo, Ni-Co-Mo, and Ni-W. Preferred examples include Ni-Mo, Ni-Co-Mo, and Ni-W. Similarly to the pre-treatment catalyst, these metals are converted to be in the form of sulfides before being used for hydrorefining.

The support of the pre-treatment catalyst is an inorganic oxide with acidic properties and preferably contains at least two types selected from silica, alumina, boria, zirconia, magnesia, and zeolite. For example, preferred are silica-alumina, titania-alumina, boria-alumina, zirconia-alumina, titania-zirconia-alumina, silica-boria-alumina, silica-zirconia-alumina, silica-titania-alumina, and silica-titania-zirconia-alumina. More preferred are silica-alumina, boria-alumia, zirconia-alumina, titania-zirconia-alumina, silica-boria-alumina, silica-zirconia-alumina and silica-titania-alumina. More preferred are silica-alumina and silica-zirconia-alumina. Most preferred are such complex oxides containing zeolite. In the case where alumina is contained, alumina can be contained in any ratio to the other components on the basis of the support. However, the content of alumina is preferably 96 percent by mass or less, more preferably 90 percent by mass or less of the support mass. If the content is more than 96 percent by mass, the catalyst would fail to exert a desired hydrocracking activity because sufficient acidic properties are not attained.

Examples of components other than silica, forming the crystalline structure of zeolite used for the post-treatment catalyst include alumina, titania, boria, and gallium. Preferred zeolites include those containing silica and alumina, i.e., alumino-silicate. There have been reported many types of zeolite crystalline structure, such as faujasite, beta, mordenite, and pentasil types. In the present invention, more preferred are faujasite, beta, and pentasil types because zeolites of these types exert a sufficient hydrotreating activity. Particularly preferred are faujasite and beta types. These zeolites may be adjusted in alumina content correspondingly to the stoichiometric ratio of the raw materials upon initiation of the synthesis of the zeolites or may be subjected to a hydrothermal treatment and/or an acid treatment. Among these zeolites, most preferred are ultra-stable Y type zeolites ultra-stabilized by a hydrothermal treatment and/or an acid treatment. It is assumed that the ultra-stable Y type zeolites have a micro porous structure peculiar thereto, so-called micro pores of 20 Å or smaller and also newly formed pores in the range of 20 to 100 Å, which pores provide reaction sites excellent for converting the oxygen components contained in fat components. The volume of the pore with a pore diameter in this range is preferably from 0.03 ml/g or larger, more preferably from 0.04 ml/g or larger. The pore volume used herein is generally determined by mercury intrusion method. The hydrothermal treatment may be carried out under the known conditions. The molar ratio of silica to alumina defined as the physical properties of the ultra-stable Y type is preferably from 10 to 120, more preferably from 15 to 70, more preferably from 25 to 50. If the molar ratio is greater than 120, the resulting catalyst is reduced in acidic properties and thus would fail to exert a sufficient hydrotreating activity. If the molar ratio is less than 10, the resulting catalyst would be too strong in acidic properties and thus encounter a rapid reduction in activity due to accelerated formation of coke. The content of the zeolite is preferably from 2 to 80 percent by mass, more preferably from 4 to 75 percent by mass, of the support mass. If the content is less than the lower limit, the resulting catalyst would fail to exert a sufficient hydrogenation activity. If the content is more than the upper limit, the resulting catalyst would be too strong in acidic properties and thus accelerate coke formation.

There is no particular restriction on the method of supporting the active metals on any of the hydrorefining catalyst, pre-treatment catalyst and post-treatment catalyst. Therefore, any conventional method for producing a usual desulfurization catalyst may be employed. A method is preferably employed in which a support is impregnated with a solution containing salts of the active metals. Alternatively, an equilibrium adsorption method, pore-filling method, or incipient-wetness method is also preferably used. For example, the pore-filling method is a method in which the pore volume of a support is measured in advance, and then the support is impregnated with the same volume of a metal salt solution. There is no particular restriction on the method of impregnating the support with a solution. Therefore, any suitable method may be used depending on the amount of the metals to be supported and physical properties of the support.

An environment friendly base gas oil is used for the gas oil composition according to the second aspect of the invention that is a hydrocarbon-containing mixed fraction comprising 50 percent by mass or more of a chain saturated hydrocarbon having 15 to 18 carbon atoms, produced by contacting the feedstock with an isomerization catalyst containing at least one or more metals selected from the Groups 6A and 8 metals of the periodic table, supported on a support containing crystalline molecular sieve, under hydrogen pressure, simultaneously with or after the above-descried hydrorefining process, and having a fatty acid alkyl ester content of 1 percent by mass or less, a free fatty acid content of 1 percent by mass or less, a total content of the metals that are sodium, potassium, calcium and magnesium of 10 ppm by mass or less, a sulfur content of 3 ppm by mass or less, an oxygen content of 1 percent by mass or less and a water content of 500 ppm by mass or less.

Preferably, the crystalline molecular sieve contained in the isomerization catalyst contains at least silicon so as to provide the catalyst with sufficient hydrodeoxidization and hydroisomerization activities. Preferably, in addition to silicon, the support contains constituting elements such as aluminum, zirconium, boron, titanium, gallium, zinc, and phosphorus. More preferably, the support contains aluminum, zirconium, boron, titanium, and phosphorus. The catalyst containing these elements can facilitate hydrodeoxidization reaction and skeletal isomerization reaction of hydrocarbons simultaneously and achieve the improved low temperature properties of the resulting produced oil.

With regard to the elements constituting the aforesaid molecular sieve, other than oxygen, the ratio of {the number of silicon atom} / {the number of atom of elements other than silicon} is preferably 3 or more, preferably 10 or more, more preferably 30 or more. If the ratio is less than 3, decomposition of paraffin is accelerated, possibly leading to a reduction in activity due to coking.

The pore diameter of the crystalline molecular sieve is 0.8 nm or smaller, more preferably 0.65 nm or smaller. If the diameter is greater than 0.8 nm, decomposition of paraffin may occur. There is no particular restriction on the crystal structure of the crystalline molecular sieve. Examples of the crystal structure include FAU, AEL, MFI, MMW, TON, MTW, *BEA, and MOR defined by International Zeolite Association.

There is no particular restriction on the method of synthesizing the crystalline molecular sieve. As generally known, the molecular sieve may be produced by hydrothermal crystallization method using raw materials of constituting components and an amine compound as a structural indicator. Examples of the raw materials include sodium silicate, colloidal silica, and alkoxide silicate for a silicon-containing compound, and aluminum oxide and sodium aluminate for aluminum. Examples of the structural indicator include tetrapropyl ammonium salt.

If necessary, the crystalline molecular sieve may be subjected to hydrothermal treatment by steam, immersion treatment by an alkali or acid aqueous solution, ion-exchange, surface treatment by basic or acid gas such as gaseous chlorine or ammonia, alone or in combination so as to adjust its physical properties.

A constituent other than the molecular sieve, of the catalyst is an inorganic oxide selected from aluminum, silicon, zirconium, boron, titanium, and magnesium. The inorganic oxide preferably containing two or more selected from aluminum, silicon, zirconium, boron, titanium, and magnesium because they can be used as a bond for forming the crystalline molecular sieve and can act as active components for facilitating hydrodeoxidization and hydroisomerization. The content of the molecular sieve in the whole catalyst is preferably from 2 to 90 percent by mass, more preferably from 5 to 85 percent by mass, more preferably from 10 to 80 percent by mass. If the content is less than 2 percent by mass, the resulting catalyst is not sufficient in hydrodeoxidization and hydroisomerization activities. If the content is more than 90 percent by mass, the catalyst can not be formed easily, possibly leading to the occurrence of some troubles in industrial production.

There is no particular restriction on the method of introducing the constituents other than the crystalline molecular sieve, such as silicon, zirconium, boron, titanium, and magnesium, except for aluminum, into the support of the catalyst. Therefore, a solution containing these elements may be used as the raw material. For silicon, silicic acid, sodium silicate, and silica sol may be used. For boron, boric acid may be used. For phosphorus, phosphoric acid and alkali metal salts thereof may be used. For titanium, titanium sulfate, titanium tetrachloride, and various alkoxide salts may be used. For zirconium, zirconium sulfate and various alkoxide salts may be used.

The raw materials of the support constituting elements, other than aluminum oxide are preferably added at any stage prior to calcination of the support. For example, the raw materials may be added to an aluminum aqueous solution which is then formed into an aluminum oxide gel containing these support constituting components, or may be added to a prepared aluminum oxide gel. Alternatively, the raw materials may be added at a step of kneading a mixture of water or an acid aqueous solution and a commercially available aluminum oxide intermediate or boehmite powder. Preferably, these support-constituting components are contained in an aluminum oxide gel during the process of preparation thereof. Although the mechanism exhibiting advantageous effects attained by addition of these support constituting components other than aluminum oxide has not been elucidated, it is assumed that these components form a complex oxide state together with aluminum. It is thus presumed that this increases the surface area of the support and cause some interaction with the active metals, thereby giving influences to the activity of the catalyst.

The support containing the crystalline molecular sieve supports one or more metals selected from the Group 8 metals of the periodic table. Among these metals, preferred are one or more metals selected from Pd, Pt, Rh, Ir, Au, and Ni. More preferably, these metals are used in combination. Preferred combinations are Pd-Pt, Pd-Ir, Pd-Rh, Pd-Au, Pd-Ni, Pt-Rh, Pt-Ir, Pt-Au, Pt-Ni, Rh-Ir, Rh-Au, Rh-Ni, Ir-Au, Ir-Ni, Au-Ni, Pd-Pt-Rh, Pd-Pt-Ir, and Pt-Pd-Ni. Among these combinations, more preferred are Pd-Pt, Pd-Ni, Pt-Ni, Pd-Ir, Pt-Rh, Pt-Ir, Rh-Ir, Pd-Pt-Rh, Pd-Pt-Ni, and Pd-Pt-Ir. Further more preferred are Pd-Pt, Pd-Ni, Pt-Ni, Pd-Ir, Pt-Ir, Pd-Pt-Ni, and Pd-Pt-Ir.

Preferably, the active metals contained in the catalyst are reduced before the catalyst is supplied to the reaction. There is no particular restriction on the reduction conditions. The active metals are reduced by treating at a temperature of 200 to 400°C, preferably 240 to 380°C under a hydrogen stream. If the reduction temperature is lower than 200°C, the active metals are not reduced sufficiently, and thus the catalyst may not exert hydrodeoxidization and hydroisomerization activities. If the reduction temperature is higher than 400°C, agglomeration of the active metals proceeds, and thus similarly the catalyst may not exert hydrodeoxidization and hydroisomerization activities.

In the present invention, the total content of the active metals in the catalyst is from 0.1 to 2 percent by mass, preferably from 0.2 to 1.5 percent by mass, more preferably from 0.5 to 1.3 percent by mass, in terms of metal, on the basis of the catalyst mass. If the total content is less than 0.1 percent, the active sites are reduced, leading to a tendency that a sufficient activity may not be attained. If the total content is more than 2 percent by mass, the metals are not dispersed effectively, leading to a tendency that a sufficient activity may not be attained.

There is no particular restriction on the method of supporting the active metals on any of the catalysts. Therefore, any conventional method for producing a usual desulfurization catalyst may be employed. A method is preferably employed in which a support is impregnated with a solution containing salts of the active metals. Alternatively, an equilibrium adsorption method, pore-filling method, or incipient-wetness method is also preferably used. For example, the pore-filling method is a method in which the pore volume of a support is measured in advance, and then the support is impregnated with the same volume of a metal salt solution. There is no particular restriction on the method of impregnating the support with a solution. Therefore, any suitable method may be used depending on the amount of the metals to be supported and physical properties of the support.

An oil to be treated is isomerized simultaneously with or after hydrorefining.

When isomerization is carried out after hydrorefining, it is preferably carried out using a method wherein the above-described catalysts are used in combination in the form of a plurality of layers in a single reactor or a method wherein a single catalyst formed to have a plurality of properties, so-called "hybrid catalyst" is used.

When hydrorefining and isomerization are carried out simultaneously, it is preferably carried out in such a combination that 70 percent by mass or more of the oxygen content of the oil to be treated is removed in the hydrogenation process, 95 percent by mass or more of the remaining oxygen content is removed in the isomerization process, and the ratio of isoparaffin/n-paraffin in the paraffin components in the refined oil is adjusted to 0.2 or greater. If the removal rate of the oxygen content in the hydrogenation process is less than 70 percent by mass, hydrodeoxidization and hydroisomerization reactions in the isomerization process may not proceed sufficiently.

In the hydrogenation process, it is preferable to use a catalyst comprising at least one or more active metals selected from the Groups 6A and 8 metals of the periodic table, supported on a porous inorganic oxide composed of two or more elements selected from aluminum, silicon, zirconium, boron, titanium, and magnesium. Preferred active metals are one or more metals selected from Pd, Pt, Rh, Ir, Au, Ni, and Mo.

In the isomerization process, a catalyst may be used, which comprises one or more metals selected from the Group 8 metals of the periodic table, supported on a support containing a crystalline molecular sieve.

One or more types of catalysts may be used in the isomerization process. For the purposes of improving the stability of the refined oil, a catalyst having hydrogenation activity may be charged in any of the stages subsequent to the isomerization process.

The environment friendly base gas oil of the gas oil according to the first or second aspect of the present invention produced as described above is a hydrocarbon-containing mixed fraction comprising 50 percent by mass or more of a saturated chain hydrocarbon having 15 to 18 carbon atoms and containing 1 percent by mass or less of a fatty acid alkyl ester, 1 percent by mass or less of a free fatty acid, 10 ppm by mass or less of the metals that are sodium, potassium, calcium and magnesium, 3 ppm by mass or less of sulfur, 1 percent by mass or less of oxygen and 500 ppm by mass or less of water.

For the environment friendly base gas oil of the second aspect of the present invention produced by contacting the feedstock with an isomerization catalyst simultaneously with or after hydrorefining, it is preferably 0.7 or greater in a value obtained by dividing the content of the chain saturated hydrocarbons with a side chain, having 15 or more carbon atoms by the content of the straight-chain saturated hydrocarbons having 15 or more carbon atoms. If the value is less than 0.7, the resulting base oil would be a base oil mainly composed of the straight-chain saturated hydrocarbon, leading to a trouble in low temperature fluidity and thus would fail to achieve the purposes of the present invention. Therefore, the value is preferably 0.7 or greater, more preferably 0.8 or greater, more preferably 0.9 or greater, particularly preferably 1.0 or greater.

The environment friendly gas oils necessarily contain 50 percent by mass or more of chain saturated hydrocarbons having 15 to 18 carbon atoms. The chain saturated hydrocarbons referred herein denote both straight-chain saturated hydrocarbons (normal paraffin) and saturated hydrocarbons having a side chain (iso paraffin). The base oils contain preferably 85 percent by mass or more, more preferably 90 percent by mass or more of chain saturated hydrocarbons having 15 to 18 carbon atoms. The chain saturated hydrocarbons having 15 to 18 carbon atoms are components with excellent ignition properties, calorific value and oxidation stability. If the content of the chain saturated hydrocarbons is less than the above-mentioned content, engine performance or the oxidation stability of the resulting gas oil would be deteriorated.

The chain saturated hydrocarbon content can be derived using GC-TOFMS. In GC-TOFMS, a sample is subjected to gas chromatography to separate its constituents, each of which is then ionized. The ions are then mass-separated by making use of the fact that the flight speed differs according to the ion mass when a given acceleration voltage is applied to ions, and a mass spectrum is obtained according to differences in arrival time at the ion detector. The ionization method in GC-TOFMS is preferably FI ionization method because the formation of fragmented ions is suppressed and the measuring accuracy can be improved. The measuring devices and conditions used in the present invention are as follows:
(GC section)
   Device: HP6890 Series GC System & Injector manufacture by HEWLETT PACKARD DEVLOPMENT COMPANY, L.P.
   Column: A glient HP-5 (30 m x 0.32 mmΦ, 0.25 µm-film)
   Carrier Gas: He, 1.4 mL/minute (constant flow)
   Inlet Temperature: 320°C
   Injection Mode: split (split ratio = 1:100)
   Oven Temperature: 50°C kept for 5 minutes,
   increased by 5°C/minute, 320°C kept for 6 minutes
   Injection Volume: 1 µL
(TOFMS section)
   Device: JMS-T100GC manufactured by JEOL Ltd.
   Counter Electrode Voltage: 10.0 kV
   Ionization Method: FI + (Field Ionization)
   GC Interface Temperature: 250°C
   Measured Mass Range: 35 to 500

The environment friendly base gas oils contain necessarily 1 percent by mass or less, preferably 0.5 percent by mass or less, more preferably 0.1 percent by mass of a fatty acid alkyl ester to ensure oxidation stability. The fatty acid alkyl ester content referred herein denotes the content of a fatty acid alkyl ester on the basis of the total mass of the base oil, measured by gas chromatography using a polarity column under the conditions set forth in Table 1 below.

**Table 1**

| Analysis conditions | |
|---|---|
| Items | Specification |
| GC Model | HP-6890 |
| Column | FFAP(Ø0.32mm × 25m) |
| Carr. Gas | He (26psi) |
| Detector | FID |
| Inj. Temp. | 280°C |
| Det. Temp. | 300°C |
| Oven Temp. | 100°C∼260°C |
| Temp. Rate | 5°C/min |
| Inj. Vol. | 0.2µL (toluene solution) |

The environment friendly base gas oils contain necessarily 1 percent by mass or less, preferably 0.5 percent by mass or less, more preferably 0.1 percent by mass or less of a free fatty acid so as to ensure oxidation stability. The free fatty acid content referred herein denotes the content of a free fatty acid on the basis of the total mass of the base oil, measured by gas chromatography using a polarity column under the conditions set forth in Table 1 above.

The environment friendly base gas oils contain necessarily 10 ppm by mass or less, preferably 8 ppm by mass or less, more preferably 6 ppm by mass in total of the metals that are sodium, potassium, calcium and magnesium with the objective of improving oxidation stability, refraining the formation of deposit in an engine and refraining the deterioration of engine oil. The contents of sodium, potassium, calcium and magnesium may be measured using a conventional elemental analysis device and, for example, determined by summing up the concentration of each metal measured with an ICP emission spectrometer.

The environment friendly base gas oils contain necessarily 3 ppm by mass or less, preferably 2 ppm by mass or less, more preferably 1 ppm by mass or less of sulfur with the objective of improving the environment friendly properties and retaining the performance of the exhaust-gas post-processing system of the engine wherein the resulting gas oil composition is used. The sulfur content used herein denotes the mass content of sulfur components on the basis of the total mass of a gas oil composition measured in accordance with JIS K 2541 "Crude oil and petroleum products-Determination of sulfur content".

The environment friendly base gas oils contain necessarily 1 percent by mass or less, preferably 0.5 percent by mass or less, more preferably 0.1 percent by mass or less of oxygen with the objective of improving oxidation stability and fuel consumption and refraining the deterioration of engine oil. The oxygen content can be measured with a conventional elemental analysis device. For example, the oxygen content is measured by converting a sample on platinum carbon to CO or further to CO₂ and measuring the amount thereof using a thermal conductivity detector.

The environment friendly base gas oils contain necessarily 500 ppm by mass or less, preferably 300 ppm by mass or less, more preferably 100 ppm by mass or less of water with the objective of improving oxidation stability and fuel consumption and refraining the deterioration of engine oil. The water content used herein denotes the water content defined by JIS K 2275 "Crude oil and petroleum products-Determination of water content".

In the present invention, the environment friendly base gas oil of the first or second aspect of the present invention produced as described above may be mixed with a hydrorefined oil produced by refining crude oil to produce a gas oil composition satisfying specific properties. The environment friendly base gas oil is blended in an amount of preferably 10 percent by mass or more, more preferably 20 percent by mass or more, more preferably 30 percent by mass or more, particularly preferably 50 percent by mass or more.

Examples of the hydrorefined oil produced by refining crude oil include hydrorefined oils having a gas oil fraction and hydrorefined oils having a kerosene fraction.

These hydrorefined oils may contain a plurality of base gas oil fractions and base kerosene fractions to an extent that the predetermined conditions are satisfied.

Examples of the hydrorefined oil having a gas oil fraction produced by refining cruse oil include hydrorefined gas oils and hydrodesulfurized gas oils produced by hydrorefining straight gas oil obtained from an atmospheric distillation unit for crude oil, vacuum gas oil produced by treating straight heavy oil or residue obtained from an atmospheric distillation unit, in a vacuum distillation unit, and catalytic-cracked or hydrotreated oil produced by catalytic-cracking or hydrotreating vacuum heavy gas oil or desulfurized fuel oil.

These hydrorefined oils may contain a plurality of base gas oil fractions and base kerosene fractions to an extent that the predetermined conditions are satisfied. Alternatively, there may be used synthesized gas oils synthesized using natural gas, asphalt, coal, and biomass as raw materials.

Hydrotreating of the above-described feedstock (petroleum-based hydrocarbon having a gas oil fraction) is generally carried out under the conditions of a reaction temperature of 170 to 320°C, a hydrogen pressure of 2 to 10 MPa, an LHSV of 0.1 to 2 h⁻¹, and a hydrogen/oil ratio of 100 to 800 NL/L, preferably a reaction temperature of 175 to 300°C, a hydrogen pressure of 2.5 to 8 MPa, an LHSV of 0.2 to 1.5 h⁻¹, and a hydrogen/oil ratio of 150 to 600 NL/1, more preferably a reaction temperature of 180 to 280°C, a hydrogen pressure of 3 to 7 MPa, an LHSV of 0.3 to 1.2 h⁻¹, and a hydrogen/oil ratio of 150 to 500 NL/L. A lower reaction temperature is advantageous for hydrogenation but is not preferable for desulfurization. Lower the hydrogen pressure and hydrogen/oil ratio, more desulfurization and hydrogenation are accelerated. However, their economical optimum points exist. A lower LHSV is advantageous for the reaction. However, a too low LHSV is disadvantageous because an enormous plant investment for construction of a reactor with a large volume is required.

The hydrotreating unit for hydrotreating the feedstock used in the present invention may be of any structure, and a single or a plurality of reactors in combination may be used. Hydrogen may be additionally introduced into the spaces between a plurality of reactors. The hydrorefining unit may be provided with a gas-liquid separation system or a hydrogen sulfide removal system.

The reaction system of the hydrotreating unit is preferably a fixed bed system. Hydrogen may be supplied in counterflow or parallel flow with respect to the feedstock. When the hydrotreating unit has a plurality of reactors, counterflow and parallel flow may be combined. The supply mode of the feedstock is generally down flow and is preferably a gas-liquid cocurrent flow mode. Hydrogen gas may be supplied as quencher into a middle portion of a reactor for the purposes of removing the reaction heat or increasing the hydrogen partial pressure.

The catalyst used for hydrotreating comprises a hydrogenation active metal supported on a porous support. The porous support may be an inorganic oxide. Examples of the inorganic oxide include alumina, titania, zirconia, boria, silica, and zeolite. In the present invention, the support is preferably composed of alumina and at least one type selected from titania, zirconia, boria, silica, and zeolite. There is no particular restriction on the method of producing the support. Therefore, there may be employed any method using raw materials in the form of sols or salt compounds each containing any of the elements. Alternatively, the support may be prepared by forming a complex oxide or hydroxide such as silica alumina, silica zirconia, alumina titania, silica titania, and alumina boria and then adding at any step alumina in the form of alumina gel, a hydroxide, or a suitable solution. Alumina can be contained in any ratio to other oxides on the basis of the porous support. However, the content of alumina is preferably 90 percent by mass or less, more preferably 60 percent by mass or less, and more preferably 40 percent by mass or less, of the support mass.

Zeolite is a crystalline alumino silicate. Examples of the crystalline structure include faujasite, pentasil, and mordenite. These zeolites may be those ultra-stabilized by a specific hydrothermal treatment and/or acid treatment or those whose alumina content is adjusted. Preferred zeolites are those of faujasite and mordenite types, and particularly preferred zeolites are those of Y and beta types. The zeolites of Y type are preferably ultra-stabilized. The ultra-stabilized zeolite have a micro porous structure peculiar thereto, so-called micro pores of 20 Å or smaller and also newly formed pores in the range of 20 to 100 Å. The hydrothermal treatment may be carried out under known conditions.

The active metal of the catalyst used for hydrotreating is at least one metal selected from the Group 6A metals of the periodic table, preferably at least one metal selected from Mo and W. The active metal may be a combination of the Group 6A metals and Group 8 metals, specifically a combination of Mo or W and Co or Ni, such as Co-Mo, Co-W, Ni-Mo, Ni-W, Co-Ni-Mo, and Co-Ni-W.

The metal sources of these metals may be inorganic salts or complex salt compounds which have been conventionally used. The method of supporting the metal may be any of methods such as immersion and ion exchange which are used for a hydrogenation catalyst. When a plurality of metals are supported, they may be supported using a mixed solution thereof at the same time. Alternatively, a plurality of metals may be supported using solutions each containing any of the metals one after another. These metal solutions may be aqueous solutions or those produced using an organic solvent.

The metal(s) may be supported on the porous support after completion of all the steps for preparing the support. Alternatively, the metal(s) may be supported on the porous support in the form of a suitable oxide, complex oxide or zeolite produced at the intermediate stage of the preparation of the porous support and then may be subjected to gel-preparation or heat-concentration and kneading.

There is no particular restriction on the amount of the active metal(s) to be supported. However, the amount is from 0.1 to 10 percent by mass, preferably from 0.15 to 5 percent by mass, more preferably from 0.2 to 3 percent by mass on the basis of the catalyst mass.

The catalyst is preferably used after it is subjected to a pre-reduction treatment under a hydrogen stream. In general, the active metal (s) are subjected to heat at 200°C or higher in accordance with the predetermined procedures, circulating a gas containing hydrogen and then reduced, thereby exerting hydrogenation activity.

Other than hydrorefined gas oil fractions, hydrorefined kerosene fractions may be used in the present invention. Such kerosene fractions may be those produced by hydrorefining predetermined feedstocks. Mainly used as such feedstocks is straight kerosene produced by vacuum-distillation of crude oil. However, there may be used hydrotreated kerosene co-produced with hydrotreated gas oil and hydrorefined kerosene produced by hydrotreating the aforesaid kerosene fractions. Alternatively, there may be used synthesized kerosene synthesized from natural gas, asphalt, coal, and biomass.

The hydrorefined kerosene fraction used in the present invention may be those produced by hydrotreating (desulfurization and refining) the above-described feedstocks in the presence of a hydrogenation catalyst.

The hydrotreating is generally carried out under the conditions of a reaction temperature of 220 to 350°C, a hydrogen pressure of 1 to 6 MPa, an LHSV of 0.1 to 10 h⁻¹, and a hydrogen/oil ratio of 10 to 300 NL/L, preferably a reaction temperature of 250 to 340°C, a hydrogen pressure of 2 to 5 MPa, an LHSV of 1 to 10 h⁻¹, and a hydrogen/oil ratio of 30 to 200 NL/1, more preferably a reaction temperature of 270 to 330°C, a hydrogen pressure of 2 to 4 MPa, an LHSV of 2 to 10 h⁻¹, and a hydrogen/oil ratio of 50 to 200 NL/L. A lower reaction temperature is advantageous for hydrogenation but is not preferable for desulfurization. Higher the hydrogen pressure and hydrogen/oil ratio, more desulfurization and hydrogenation are accelerated. However, their economical optimum points exist. A lower LHSV is advantageous for the reaction. However, a too low LHSV is disadvantageous because an enormous plant investment for construction of a reactor with an extremely large volume is required.

The hydrotreating unit for hydrotreating the feedstock used in the present invention may be of any structure, and a single or a plurality of reactors in combination may be used. Hydrogen may be additionally introduced into the spaces between a plurality of reactors. The hydrotreating unit may be provided with a gas-liquid separation system or a hydrogen sulfide removal system.

The reaction system of the hydrotreating unit is preferably a fixed bed system. Hydrogen may be supplied in counterflow or parallel flow with respect to the feedstock. When the hydrotreating unit has a plurality of reactors, counterflow and parallel flow may be combined. The supply mode of the feedstock is generally down flow and is preferably a gas-liquid cocurrent flow mode. Hydrogen gas may be supplied as quencher into a middle portion of a reactor for the purposes of removing the reaction heat or increasing the hydrogen partial pressure.

The catalyst used for hydrotreating comprises a hydrogenation active metal supported on a porous support. The porous support may be a porous inorganic oxide composed of mainly alumina. Examples of the inorganic oxide include alumina, titania, zirconia, boria, silica, and zeolite. In the present invention, the support is preferably composed of alumina and at least one type selected from titania, zirconia, boria, silica, and zeolite. There is no particular restriction on the method of producing the support. Therefore, there may be employed any method using raw materials in the form of sols or salt compounds each containing any of the elements. Alternatively, the support may be prepared by forming a complex oxide or hydroxide such as silica alumina, silica zirconia, alumina titania, silica titania, and alumina boria and then adding at any step alumina in the form of alumina gel, a hydroxide, or a suitable solution. Alumina can be contained in any percentage to other oxides on the basis of the porous support. However, the content of alumina is preferably 90 percent by mass or less, more preferably 60 percent by mass or less, more preferably 40 percent by mass or less, of the support mass. These conditions and the catalyst are not particularly restricted as long as the properties of the feedstock are satisfied.

Zeolite is a crystalline alumino silicate. Examples of the crystalline structure include faujasite, pentasil, and mordenite. These zeolites may be those ultra-stabilized by a specific hydrothermal treatment and/or acid treatment or those whose alumina content is adjusted. Preferred zeolites are those of faujasite and mordenite types, and particularly preferred zeolites are those of Y and beta types. The zeolites of Y type are preferably ultra-stabilized. The ultra-stabilized zeolite have a micro porous structure peculiar thereto, with so-called micro pores of 20 Å or smaller and also newly formed pores in the range of 20 to 100 Å. The hydrothermal treatment may be carried out under known conditions.

The active metal of the catalyst used for hydrotreating is at least one metal selected from the Group 6A metals of the periodic table, preferably at least one metal selected from Mo and W. The active metal may be a combination of the Group 6A metals and Group 8 metals, specifically a combination of Mo or W and Co or Ni, such as Co-Mo, Co-W, Ni-Mo, Ni-W, Co-Ni-Mo, and Co-Ni-W. The metal sources of these metals may be inorganic salts or complex salt compounds which have been conventionally used. The method of supporting the metal may be any of methods such as immersion and ion exchange which are used for a hydrogenation catalyst. When a plurality of metals are supported, they may be supported using a mixed solution thereof at the same time. Alternatively, a plurality of metals may be supported using solutions each containing any of the metals one after another. These metal solutions may be aqueous solutions or those produced using an organic solvent.

The metal(s) may be supported on the porous support after completion of all the steps for preparing the support. Alternatively, the metal(s) may be supported on the porous support in the form of a suitable oxide, complex oxide or zeolite produced at the intermediate stage of the preparation of the porous support and then may be subjected to gel-preparation or heat-concentration and kneading.

There is no particular restriction on the amount of the active metal(s) to be supported. However, the amount is from 0.1 to 10 percent by mass, preferably from 0.15 to 5 percent by mass, more preferably from 0.2 to 3 percent by mass on the basis of the catalyst mass.

The catalyst is preferably used after it is subjected to a pre-reduction treatment under a hydrogen stream. In general, the active metal (s) are subjected to heat at 200°C or higher in accordance with the predetermined procedures, circulating a gas containing hydrogen and then reduced, thereby exerting catalytic activity.

Necessarily, the gas oil composition of the present invention comprises the above-described environment friendly base gas oil, i.e., hydrocarbon-containing mixed fraction and has a sulfur content of 5 ppm by mass or less, an oxygen content of 0.5 percent by mass or less, a cetane number of 55 or greater and a peroxide number after an accelerated oxidation test of 50 ppm by mass or less and satisfies the requirements defined by the following formulas:
(Formula 1) the content of the chain saturated hydrocarbons having 15 to 18 carbon atoms > 2 x the content of the chain saturated hydrocarbons having 14 or fewer carbon atoms; and
(Formula 2) the content of the chain saturated hydrocarbons having 15 to 18 carbon atoms > 3 x the content of the chain saturated hydrocarbons having 19 or more carbon atoms.

The sulfur content of the gas oil compositions of the present invention is necessarily 5 ppm by mass or less, preferably 4 ppm by mass or less, more preferably 3 ppm by mass or less, more preferably 2 ppm by mass or less, more preferably 1 ppm by mass or less with the objective of reducing poisonous substances exhausted from an engine and improving exhaust-gas post-processing system performances. The sulfur content used herein denotes the mass content of the sulfur components on the basis of the total mass of a gas oil composition measured in accordance with JIS K 2541 "Crude oil and petroleum products-Determination of sulfur content".

The oxygen content of the gas oil compositions of the present invention is necessarily 0.5 percent by mass or less, preferably 0.4 percent by mass or less, more preferably 0.3 percent by mass or less, more preferably 0.2 percent by mass or less, more preferably 0.1 percent by mass or less with the objective of improving oxidation stability. The oxygen content can be measured with a conventional elemental analysis device. For example, the oxygen content is measured by converting a sample on platinum carbon to CO or further to CO₂ and measuring the amount thereof using a thermal conductivity detector.

The cetane number of the gas oil compositions of the present invention is preferably 55 or greater, more preferably 56 or greater. If the cetane number is lower than 55, it is likely that the concentrations of Nox, PM and aldehydes would be increased. There is no particular restriction on the lower limit of the cetane number. However, with the objective of reducing black smoke in exhaust gas, the cetane number is preferably 90 or lower, more preferably 88 or lower, more preferably 85 or lower. The gas oil compositions of the present invention can be increased in cetane number by adding thereto an adequate amount of a cetane number improver, if necessary. The cetane number used herein denotes the cetane number measured in accordance with "7. Cetane number test method" prescribed in JIS K 2280 "Petroleum products-Fuels-Determination of octane number, cetane number and calculation of cetane index".

There is no particular restriction on the cetane index of the gas oil compositions of the present invention. However, the cetane index is preferably 50 or greater. If the cetane index is lower than 50, it is likely that the concentrations of PM, aldehydes, and NOx in exhaust gas would be increased. For the same reasons, the cetane index is preferably 52 or greater, more preferably 54 or greater. The cetane index used herein denotes the value calculated in accordance with "8.4 cetane index calculation method using variables equation" prescribed in JIS K 2280 "Petroleum products-Fuels-Determination of octane number, cetane number and calculation of cetane index". The cetane index defined by the JIS standards is generally applied to gas oil containing no cetane number improver. However, in the present-invention, "8.4 cetane index calculation method using variables equation" is applied to a gas oil containing a cetane number improver, and the value obtained thereby is also defined as cetane index.

The peroxide number of the gas oil compositions of the present invention after the above-described oxidation stability test is necessarily 50 ppm by mass or less, more preferably 30 ppm by mass or less, more preferably 10 ppm by mass or less in view of storage stability and compatibility to parts. The oxidation stability test used herein is carried out at a temperature of 95°C under oxygen bubbling for 16 hours in accordance with ASTM D2274-94. The peroxide number used herein denotes the value measured in accordance with JPI-5S-46-96 prescribed in JPI Standard and Manuals Testing Method for Petroleum Products published by Japan Petroleum Inst. An anti-oxidant or a metal deactivator may be added to the gas oil compositions in order to reduce the total insoluble content or the peroxide number.

The total insoluble content of the gas oil compositions after an oxidation stability test is preferably 2.0 mg/100 mL or less, more preferably 1.5 mg/100 mL or less, more preferably 1.0 mg/100 mL or less, more preferably 0.5 mg/100 mL or less. The oxidation stability test used herein is carried out at a temperature of 95°C under oxygen bubbling for 16 hours in accordance with ASTM D2274-94. The total insoluble content after an oxidation stability test denotes the value measured in accordance with the foregoing oxidation stability test.

The gas oil compositions of the present invention necessarily satisfies the requirements defined by the following formulas:
(Formula 1) the content of the chain saturated hydrocarbons having 15 to 18 carbon atoms > 2 x the content of the chain saturated hydrocarbons having 14 or fewer carbon atoms; and
(Formula 2) the content of the chain saturated hydrocarbons having 15 to 18 carbon atoms > 3 x the content of the chain saturated hydrocarbons having 19 or more carbon atoms. Both of the above formulas give a restriction to the carbon number distribution of the chain saturated hydrocarbons in the gas oil composition. That is, these formulas are provided in order that on the basis of the content of the chain saturated hydrocarbons from 15 to 18 carbon atoms, the content of the rest of those are divided into the content region of those having f-ewer carbon atoms and the content region of those having more carbon atoms and the ratio of these regions are defined. The region of 14 or fewer carbon atoms contains mainly hydrocarbon compounds that exert an influence on the volatility of fuel.
However, if the ratio of this region is too high, the resulting fuel is lightened, leading to the likelihood that the deterioration of fuel consumption would be induced and the evaporation and combustion of heavier fuel would be inhibited. The region of 19 or more carbon atoms contains mainly hydrocarbon compounds that exert an influence on the calorific value, density and viscosity of fuel. However, if the ratio of this region is too high, the resulting fuel becomes heavier, leading to the likelihood that the region would cause deterioration in combustion and exhaust gas properties, in particular unburnt hydrocarbons emission. The chain hydrocarbons having 15 to 18 carbon atoms are components which are most preferably contained in view of fuel consumption, exhaust gas properties, oxidation stability, adverse affects on engine oil and low-temperature startability. It has been difficult to compose a gas oil composition only with these components, and the present invention is the first that makes it possible to compose such a gas oil composition. When the gas oil composition is mixed with other base fuels, the ratio of the above-described three regions is optimized in terms of fuel consumption, exhaust gas properties, oxidation stability, adverse affects on engine oil and low-temperature startability thereby obtaining the regions that satisfy the properties sought by the present invention. As the result of the study of the inventors, the ratio optimizing the regions was invented, rendering it possible to provide a gas oil composition with the above-described advantageous effects. The coefficients in Formulas 1 and 2 are numerals obtained as the result of the analysis of statistics of experiment results. The chain saturated hydrocarbons referred herein denote those measured by the above-mentioned GC-TOFMS.

The gas oil composition of the present invention is preferably 0.7 or greater in a value obtained by dividing the content of the chain saturated hydrocarbons with a side chain, having 15 or more carbon atoms (normal paraffin) by the content of the straight-chain saturated hydrocarbons having 15 or more carbon atoms (iso paraffin). When the value is less than 0.7, the resulting gas oil composition will be a base material containing mainly the chain saturated hydrocarbon and thus will have trouble in low-temperature fluidity, leading to a failure to achieve the purposes of the present invention. Therefore, the value is preferably 0.7 or greater, more preferably 0.8 or greater, more preferably 0.9 or greater, particularly preferably 1.0 or greater.

The cloud point of the gas oil compositions of the present invention is 0°C or lower, more preferably -2°C or lower, more preferably -5°C or lower with the objective of securing low-temperature startability and drivability and with the objective of retaining the injection performance of an electronically controlled fuel injection pump. The cloud point referred herein denotes the pour point measured in accordance with JIS K 2269 "Testing Method for Pour Point and Cloud Point of Crude Oil and Petroleum Products".

There is no particular restriction on the cold filter plugging point (CFPP) of the gas oil compositions of the present invention. The cold filter plugging point is preferably 0°C or lower, more preferably -2°C or lower, more preferably -5°C or lower with the objective of preventing of plugging of the pre-filter of a diesel powered automobile and securing fuel fluidity at low temperatures. The cold filter plugging point used herein denotes the cold filter plugging point measured in accordance with JIS K 2288 "Gas oil-Determination of cold filter plugging point".

There is no particular restriction on the pour point of the gas oil compositions of the present invention. However, the pour point is preferably 0°C or lower, -2.5°C or lower, more preferably -5°C or lower, more preferably -7.5°C or lower with the objective of securing low-temperature startability or drivability and retaining the injection performance of an electronically controlled fuel injection pump. The pour point referred herein denotes the pour point measured in accordance with JIS K 2269 "Testing Method for Pour Point and Cloud Point of Crude Oil and Petroleum Products".

The aromatic content of the gas oil compositions of the present invention is preferably 15 percent by volume or less, more preferably 13 percent by volume or less, more preferably 12 percent by volume or less with the objective of enhancing the environment load reducing effects and reducing NOx and PM. The aromatic content used herein denotes the volume percentage (volume %) of the aromatic component content measured in accordance with JPI-5S-49-97 "Petroleum Products-Determination of Hydrocarbon Types-High Performance Liquid Chromatography" prescribed in JPI Standard and Manuals Testing Method for Petroleum Products published by Japan Petroleum Inst.

With regard to the distillation characteristics of the gas oil compositions of the present invention, the 90% distillation temperature is preferably 280°C or higher and 350°C or lower. If the 90% distillation temperature exceeds the upper limit, the emissions of PM and fine particles would increase, leading to the tendency that the environment load reducing effects are diminished. If the 90% distillation temperature is lower than the lower limit, the resulting composition would fail to attain a sufficient fuel consumption improving effect, leading to the tendency that the engine output is reduced. Therefore, the 90% distillation temperature is more preferably 285°C or higher and 345°C or lower, more preferably 290°C or higher and 340°C or lower.

There is no particular restriction on the 10% distillation temperature of the gas oil compositions. However, the 10% distillation temperature is 265°C or lower, more preferably 260°C or lower. If the 10% distillation temperature exceeds the upper limit, the exhaust gas performance of an engine tends to deteriorate. The 10% distillation temperature is preferably 160°C or higher, more preferably 170°C or higher, more preferably 180°C or higher. If the 10% distillation temperature is lower than the lower limit, the engine output and high temperature startability tend to deteriorate.

The 10% distillation temperature and 90% distillation temperature referred herein denote the values measured in accordance with JIS K 2254 "Petroleum products-Determination of distillation characteristics".

There is no particular restriction on the flash point of the gas oil compositions of the present invention. However, the flash point is preferably 50°C or higher, more preferably 54°C or higher, more preferably 58°C or higher in view of safety. The flash point referred herein denotes the value measured in accordance with JIS K 2265 "Crude oil and petroleum products-Determination of flash point".

There is no particular restriction on the density at 15°C of the gas oil compositions of the present invention. However, the density is preferably 750 kg/cm³ or higher, more preferably 755 kg/cm³ or higher, more preferably 760 kg/cm³ or higher with the objective of retaining the calorific value. The density referred herein denotes the density measured in accordance with JIS K 2249 "Crude petroleum and petroleum products-Determination of density and petroleum measurement tables based on a reference temperature (15°C)" .

The gas oil compositions of the present invention have necessarily such a lubricating performance that the HFRR wear scar diameter (WS1.4) is 400 µm or smaller. If the HFRR wear scar diameter (WS1.4) is greater than 400 µm, the composition would cause a diesel engine equipped with a distribution type injection pump in particular to be increased in driving torque and in wear on each part of the pump while the engine is driven, possibly leading not only to degradation of the exhaust gas properties but also to the breakdown of the engine itself. Also in an electronically controlled fuel injection pump enabling a high pressure injection, wear on the sliding parts would likely occur.

The HFRR wear scar diameter (WS1.4) referred herein denotes the lubricity measured in accordance with JPI-5S-50-98 "Gas oil -Testing Method for Lubricity" prescribed in JPI Standard and Manuals Testing Method for Petroleum Products published by Japan Petroleum Inst.

There is no particular restriction on the water content of the gas oil compositions of the present invention. However, the water content is necessarily 550 ppm by mass or less, preferably 300 ppm by mass or less, more preferably 100 ppm by mass or less with the objective of improving the oxidation stability and fuel consumption and preventing an engine oil from deteriorating. The water content referred herein denotes the water content defined by JIS K 2275 "Crude oil and petroleum products-Determination of water content".

The kinematic viscosity at 30°C of the gas oil compositions of the present invention is preferably 2 mm²/s or greater, more preferably 2.5 mm²/s or greater, 2.7 mm²/s or greater, particularly preferably 3 mm²/s or greater. If the kinematic viscosity is lower than 2 mm²/s, it would be difficult to control the fuel injection timing at the fuel injection pump side, and lubricity at each part of the fuel injection pump installed in an engine would be reduced. The kinematic viscosity is preferably 5 mm²/s or lower, more preferably 4. 7 mm²/s or lower, more preferably 4.5 mm²/s or lower. If the kinematic viscosity exceeds 5 mm²/s, the fuel injection system is destabilized due to an increase in resistance therein and thus the NOx and PM concentrations in the exhaust gas are increased. The kinematic viscosity referred herein denotes the value measured in accordance with JIS K 2283 "Crude petroleum and petroleum products-Determination of kinematic viscosity and calculation of viscosity index from kinematic viscosity".

There is no particular restriction on the carbon residue of the 10% distillation residue of the gas oil compositions of the present invention. However, the carbon residue of the 10% distillation residue is preferably 0.1 percent by mass or less, more preferably 0.08 percent by mass or less, more preferably 0.06 percent by mass or less with the objective of reducing fine particles and PM and retaining the performances of the exhaust-gas post-processing system installed in an engine. The carbon residue of the 10% distillation residue referred herein denotes that measured in accordance with JIS K 2270 "Crude petroleum and petroleum products-Determination of carbon residue".

The ash content of the gas oil compositions of the present invention is preferably less than 0.01 percent by mass. If the ash content exceeds the upper limit, the ash becomes the core of PM during combustion in an engine and the amounts of the entire PM and nano particles are increased. Further when the ash is exhausted as it is, it is accumulated in the exhaust-gas post-processing system, and thus the performances thereof are deteriorated. The ash content used herein denotes the value measured in accordance with JIS K 2272 "Testing Methods for Ash and Sulfated Ash of Crude Oil and Petroleum Products".

There is no particular restriction on the electric conductivity of the gas oil compositions of the present invention. However, the electric conductivity is preferably 50 pS/m or greater in view of safety. An anti-static additive may be added to the gas oil compositions in order to improve the electric conductivity thereof. The electric conductivity used herein denotes the value measured in accordance with JIS K 2276 "Petroleum products-Testing methods for aviation fuels".

The total acid number of the gas oil compositions of the present invention is preferably 1.0 mgKOH/g or less. The total acid number indicates the amount of the free fatty acid in a mixture. If the total acid number is larger, parts would be adversely affected by acid compounds. Therefore, the total acid number is preferably 1.0 mgKOH/g or less, more preferably 0.9 mgKOH/g or less, more preferably 0.8 mg/KOH or less. The total acid number used herein denotes that measured in accordance with JIS K 2501 "Petroleum products and lubricants-Determination of neutralized number".

If necessary, the gas oil compositions of the present invention may be blended with a cetane number improver as much as is sufficient so as to enhance the cetane number.

The cetane number improver may be any of various compounds known as a cetane number improver for gas oil. Examples of such a cetane number improver include nitrate esters and organic peroxides. These cetane number improvers may be used alone or in combination.

Preferred for use in the present invention are nitrate esters. Examples of the nitrate esters include various nitrates such as 2-chloroethyl nitrate, 2-ethoxyethyl nitrate, isopropyl nitrate, butyl nitrate, primary amyl nitrate, secondary amyl nitrate, isoamyl nitrate, primary hexyl nitrate, secondary hexyl nitrate, n-heptyl nitrate, n-octyl nitrate, 2-ethylhexyl nitrate, cyclohexyl nitrate, and ethylene glycol dinitrate. Particularly preferred are alkyl nitrates having 6 to 8 carbon atoms.

The content of the cetane number improver is preferably 500 ppm by mass or more, more preferably 600 ppm by mass or more, more preferably 700 ppm by mass or more, more preferably 800 ppm by mass or more, most preferably 900 ppm by mass or more on the basis of the total mass of each of the gas oil compositions. If the content of the cetane number improver is less than 500 ppm by mass, the cetane number improving effect may not be attained sufficiently, leading to the tendency that PM, aldehydes, and NOx in the exhaust gas from a diesel engine are not reduced sufficiently. There is no particular restriction on the upper limit content of the cetane number improver. However, the upper limit is preferably 1400 ppm by mass or less, more preferably 1250 ppm by mass or less, more preferably 1100 ppm by mass or less, most preferably 1000 ppm by mass or less, on the basis of the total mass of each of the gas oil compositions.

The cetane number improver may be any of those synthesized in accordance with conventional methods or commercially available products. Such products in the name of cetane number improver are available in a state wherein the effective component contributing to an improvement in cetane number (i.e., cetane number improver itself) is diluted with a suitable solvent. In the case where the gas oil compositions of the present invention are prepared using any of such commercially available products, the content of the effective component is preferably within the above-described range.

In addition to the cetane number improver, the gas oil compositions may be blended with other additives, particularly preferably with a lubricity improver and/or a detergent.

The lubricity improver may be any one or more types selected from carboxylic acid-, ester-, alcohol- and phenol-based lubricity improvers. Among these lubricity improvers, preferred are carboxylic acid-and ester-based lubricity improvers.

The carboxylic acid-based lubricity improver may be linoleic acid, oleic acid, salicylic acid, palmitic acid, myristic acid or hexadecenoic acid or a mixture of two or more of these carboxylic acids.

Examples of the ester-based lubricity improver include carboxylic acid esters of glycerin. The carboxylic acid forming the carboxylic acid ester may be of one or more types. Specific examples of the carboxylic acid include linoleic acid, oleic acid, salicylic acid, palmitic acid, myristic acid or hexadecenoic acid.

There is no particular restriction on the amount of the lubricity improver to be blended if the HFRR wear scar diameter (WS1.4) is within the above-described preferred range. However, the amount is preferably 35 ppm by mass or more, more preferably 50 ppm by mass or more on the basis of the total mass of each of the compositions. When the lubricity improver is blended in an amount within these ranges, it can effectively perform its efficacy thereof. For example, in a diesel engine equipped with a distribution type injection pump, the lubricity improver can suppress the driving torque from increasing and can reduce wear on each part of the pump while the engine is driven. The upper limit amount is preferably 150 ppm by mass or less, more preferably 105 ppm by mass or less because its effect as balanced with the amount is not obtained.

Examples of the detergents include ashless dispersants, for example, imide compounds; alkenyl succinimides such as polybutenyl succinimide synthesized from polybutenyl succinic anhydrate and ethylene polyamines; succinic acid esters such as polybutenyl succinic acid ester synthesized from polyhydric alcohols such as pentaerythritol and polybutenyl succinic anhydrate; copolymerized polymers such as copolymers of dialkylaminoethyl methacrylates, polyethylene glycol methacrylates, or vinylpyrrolidon and alkylmethacrylates; and reaction products of carboxylic acids and amines. Among these, preferred are alkenyl succinimides and reaction products of carboxylic acids and amines. These detergents may be used alone or in combination.

When an alkenyl succinimide is used, an alkenyl succinimide having a molecular weight of 1000 to 3000 may be used alone, or an alkenyl succinimide having a molecular weight of 700 to 2000 and an alkenyl succinimide having a molecular weight of 10000 to 20000 may be used in combination.

Carboxylic acids constituting reaction products of carboxylic acids and amines may be of one or more types. Specific examples of the carboxylic acids include fatty acids having 12 to 24 carbon atoms and aromatic carboxylic acids having 7 to 24 carbon atoms. Examples of fatty acids having 12 to 24 carbon atoms include, but not limited thereto, linoleic acid, oleic acid, palmitic acid, and myristic acid. Examples of aromatic carboxylic acids having 7 to 24 carbon atoms include, but not limited thereto, benzoic acid and salicylic acid. Amines constituting reaction products of carboxylic acids and amines may be of one or more types. Typical examples of amines used herein include, but not limited thereto, oleic amines.

### Various amines may also be used.

There is no particular restriction on the amount of the detergent to be blended. However, the amount is preferably 30 ppm by mass or more, more preferably 60 ppm by mass or more, more preferably 80 ppm by mass or more, on the basis of the total mass of each of the compositions, because the detergent can perform its effect to suppress a fuel injection nozzle from plugging. The effect may not be obtained if the amount is less than 30 ppm by mass. On the other hand, if the detergent is blended in a too much amount, its effect as balanced with the amount is not obtained. Therefore, the amount of the detergent is preferably 300 ppm by mass or less, more preferably 180 ppm by mass or less because the detergent may increase the amounts of NOx, PM and aldehydes in the exhaust gas from a diesel engine.

Like the above-described cetane number improver, products in the name of lubricity improver or detergent are available in a state wherein the effective component contributing to an improvement in lubricity or to detergency is diluted with a suitable solvent. In the case where such products are blended with the gas oil compositions of the present invention, the content of the effective component is preferably within the above-described range.

In order to further enhance the properties of the gas oil compositions of the present invention, other known fuel oil additives (hereinafter referred to as "other additives" for convenience) may be used alone or in combination. Examples of other additives include cold flow improvers such as ethylene- vinyl acetate copolymers and alkenylsuccinic amides; phenol- and amine-based anti-oxidants; metal deactivators such as salicyliden derivatives; anti-icing agents such as polyglycol ethers; anti-corrosion agents such as aliphatic amines and alkenyl succinic acid esters; anti-static additives such as anionic, cationic, and amphoteric surface active agents; coloring agents such as azo dye; and silicone-based defoaming agents.

The amounts of other additives may be arbitrarily selected. However, the amount of each of other additives is preferably 0.5 percent by mass or less, more preferably 0.2 percent by mass or less, on the basis of the total mass of each of the compositions.

The gas oil compositions of the present invention comprising an environment friendly base gas oil produced from a triglyceride-containing hydrocarbon that is an animal or vegetable fat and/or a component originating therefrom and having specific fuel characteristics are excellent in life cycle CO₂ emission properties, fuel consumption, oxidation stability and low-temperature startability and are capable of preventing the deterioration of engine oil performances.

### [Applicability in the Industry]

The gas oil compositions of the present invention contain an environment friendly base gas oil produced from a triglyceride-containing hydrocarbon that is an animal or vegetable fat and/or a component originating therefrom and thus have excellent life cycle CO₂ emission properties, fuel consumption, oxidation stability and low-temperature startability and the capability of preventing the deterioration of gas oil performances, all of which were difficult to achieve with the conventional gas oil compositions.

### [Examples]

Hereinafter, the present invention will be described in more details by way of the following examples and comparative examples, which should not be construed as limiting the scope of the invention.

Properties of fuels were determined by the following methods.

The density indicates that measured in accordance with JIS K 2249 "Crude petroleum and petroleum products-Determination of density and petroleum measurement tables based on a reference temperature (15°C) ".

The kinematic viscosity indicates that measured in accordance with JIS K 2283 "Crude petroleum and petroleum products-Determination of kinematic viscosity and calculation of viscosity index from kinematic viscosity".

The sulfur content indicates the mass content of the sulfur components on the basis of the total mass of the composition, measured in accordance with JIS K 2541 "Crude oil and petroleum products-Determination of sulfur content".

The oxygen content was measured by an elemental analysis method.

All of the distillation characteristics are values measured in accordance with JIS K 2254 "Petroleum products-Determination of distillation characteristics".

The content of chain saturated hydrocarbons are that measured with the above-described GC-TOFMS.

The cloud point denotes that measured in accordance with JIS K 2269 "Testing Method for Pour Point and Cloud Point of Crude Oil and Petroleum Products".

The cold filter plugging point denotes that measured in accordance with JIS K 2288 "Gas oil-Determination of cold filter plugging point".

The pour point denotes that measured in accordance with JIS K 2269 "Testing Method for Pour Point and Cloud Point of Crude Oil and Petroleum Products". The aromatic content denotes the volume percentage (volume %) of the aromatic component content measured in accordance with JPI-5S-49-97 "Petroleum Products-Determination of Hydrocarbon Types-High Performance Liquid Chromatography" prescribed in JPI Standard and Manuals Testing Method for Petroleum Products published by Japan Petroleum Inst.

The water content denotes that measured in accordance with JIS K 2275 "Crude oil and petroleum products-Determination of water content-Potentiometric Karl Fischer titration method".

The flash point denotes the value measured in accordance with JIS K 2265 "Crude oil and petroleum products-Determination of flash point".

The total acid number denotes that measured in accordance with JIS K 2501 "Petroleum products and lubricants-Determination of neutralized number".

The cetane index and cetane number denote the values calculated in accordance with "8.4 cetane number calculation method using variables equation" prescribed in JIS K 2280 "Petroleum products-Fuels-Determination of octane number, cetane number and calculation of cetane number". The cetane index defined by the JIS standards is not generally applied to gas oil containing a cetane number improver. However, in the present invention, "8.4 cetane number calculation method using variables equation" is applied to a gas oil containing a cetane number improver, and the value obtained thereby is also defined as cetane index.

The cetane number denotes that measured in accordance with "7. Cetane number test method" prescribed in JIS K 2280 "Petroleum products-Fuels-Determination of octane number, cetane number and calculation of cetane index".

The lubricity, i.e., HFRR wear scar diameter (WS1.4) referred herein denotes lubricity measured in accordance with JPI-5S-50-98 "Gas oil -Testing Method for Lubricity" prescribed in JPI Standard and Manuals Testing Method for Petroleum Products published by Japan Petroleum Inst. The carbon residue content of the 10% distillation residue referred herein denotes that measured in accordance with JIS K 2270 "Crude petroleum and petroleum products-Determination of carbon residue".

The ash content denotes the value measured in accordance with JIS K 2272 "Testing Methods for Ash and Sulfated Ash of Crude Oil and Petroleum Products".

The insoluble content after an oxidation stability test denotes the value measured after the compositions are subjected-to an accelerated oxidation at a temperature of 95°C under oxygen bubbling for 16 hours in accordance with ASTM D2274-94.

The peroxide number denotes the value measured in accordance with JPI-5S-46-96 prescribed in JPI Standard and Manuals Testing Method for Petroleum Products published by Japan Petroleum Inst. The electrical conductivity denotes the value measured in accordance with JIS K 2276 "Petroleum products-Testing methods for aviation fuels".

The contents of free fatty acid ester and fatty acid alkyl ester denote the ratio thereof to the total mass of base oils, measured by gas chromatography using the above-described polarity column.

The content of the metals that are Na, K, Ca and Mg denotes the total concentration thereof measured with an ICP emission spectrometer.

### (Examples 1 to 8 and Comparative Examples 1 to 4)

Vegetable fats and vacuum gas oil, each having the properties set forth in Table 2 were reacted under the reaction conditions set forth in Table 3 so as to produce environment friendly base gas oils set forth in Table 4.

Vegetable fats and vacuum gas oil, each having the properties set forth in Table 2 were reacted under the reaction conditions set forth in Table 7 so as to produce environment friendly base gas oils set forth in Table 8.

Environment friendly base gas oil 1, 2 and 3 are produced by reacting vegetable fat 1, vegetable fat 2 and a mixture of vacuum gas oil and vegetable fat 1 at a ratio of 80:20, respectively as feedstock.

The properties of fatty acid alkyl esters produced by alkyl-esterifying the vegetable fats set forth in Table 2 are also set forth in Table 5 (Comparative Examples 2 and 3) . These fatty acid alkyl esters are methyl ester compounds produced by reacting the vegetable fats with methanol. An ester exchange reaction was used wherein an ester compound is produced by reacting the vegetable fats directly with an alkyl alcohol, stirring at a temperature of 70°C for about one hour in the presence of an alkyl catalyst(sodium methylate).

The environment friendly base gas oils, methyl-esterified products of the vegetable fats, and hydrorefined oil which is a petroleum base oil set forth in Table 4 were blended to produce gas oil compositions (Examples 1 to 4 and Comparative Examples 1 to 4).

The environment friendly base gas oils, methyl-esterified products of the vegetable fats, and hydrorefined oil which is a petroleum base oil set forth in Table 8 were blended to produce gas oil compositions (Examples 5 to 8).

The following additives were used.
- Lubricity Improver:: a carboxylic acid mixture containing linoleic acid as the main component
- Detergent:: a reaction product of a carboxylic acid mixture containing linoleic acid as the main component and oleic amine
- Low Temperature Fluidity Improver:: an ethylene-vinyl acetate copolymer

Tables 5 and 9 also shows the blend ratio in each of the gas oil compositions, and the density at 15°C, kinematic viscosity at 30°C, flash point, sulfur content, oxygen content, distillation characteristics, chain saturated hydrocarbon content, cloud point, cold filter plugging point, pour point, aromatic content, cetane number, cetane index, carbon residue content of the 10% distillation residue, ash content, water content, insoluble content after an oxidation stability test, peroxide number, electrical conductivity, and wear scar diameter, of each of the gas-oil compositions.

As set forth in Table 5, the gas oil compositions used in Examples and Comparative Examples are those produced by blending the environment friendly base gas oils, alkyl-esterified products of the vegetable fats, and hydrorefined oil which is a petroleum base oil at specific ratios.

As apparent from Table 5, Examples 1 to 4 wherein the environment friendly base gas oils and the mixture of one of the base gas oils with the hydrorefined oil were used and blended in amounts within the range defined by the present invention enabled the easy and certain production of gas oil compositions with a sulfur content of 5 ppm by mass or less, an oxygen content of 0.5 ppm by mass or less, a cetane number of 55 or greater and a peroxide number after an accelerated oxidation test of 50 ppm by mass or less, satisfying both of the requirements defined by
(Formula 1) the content of the chain saturated hydrocarbons having 15 to 18 carbon atoms > 2 x the content of the chain saturated hydrocarbons having 14 or fewer carbon atoms; and
(Formula 2) the content of the chain saturated hydrocarbons having 15 to 18 carbon atoms > 3 x the content of the chain saturated hydrocarbons having 19 or more carbon atoms.

As apparent from Table 9, Examples 5 to 10 wherein the environment friendly base gas oils and the mixture of one of the base gas oils with the hydrorefined oil were used and blended in amounts within the range defined by the present invention enabled the easy and certain production of gas oil compositions with a sulfur content of 5 ppm by mass or less, an oxygen content of 0.5 ppm by mass or less, a cetane number of 55 or greater, a peroxide number after an accelerated oxidation test of 50 ppm by mass or less, and a value obtained by dividing the content of the chain saturated hydrocarbons with a side chain, having 15 or more carbon atoms by the content of the straight-chain saturated hydrocarbons having 15 or more carbon atoms, of 0.7 or greater, satisfying both of the requirements defined by
(Formula 1) the content of the chain saturated hydrocarbons having 15 to 18 carbon atoms > 2 x the content of the chain saturated hydrocarbons having 14 or fewer carbon atoms; and
(Formula 2) the content of the chain saturated hydrocarbons having 15 to 18 carbon atoms > 3 x the content of the chain saturated hydrocarbons having 19 or more carbon atoms.

Whereas, Comparative Examples 1 to 4 wherein the gas oil compositions were produced without using the specific environment friendly base gas oils failed to produce the compositions intended by the present invention.

The following various tests were carried out using the gas oil compositions of Examples 1 to 10 and Comparative Examples 1 to 4. All of the test results are set forth in Tables 6 and 10. It is apparent from the results set forth in Table 6 that the gas oil compositions of Examples 1 to 4 were less in life cycle carbon dioxide emissions, more excellent in fuel consumption and oxidation stability, and gave less adverse affect to engine oil, compared with the gas oil compositions of Comparative Examples 1 to 4. It is apparent from the results set forth in Table 6 that the gas oil compositions of Examples 5 to 10 were less in life cycle carbon dioxide emissions, more excellent in fuel consumption, oxidation stability and low-temperature startability, and gave less adverse affect to engine oil, compared with the gas oil compositions of Comparative Examples 1 to 4.

The tests using a vehicle was carried out in accordance with Exhibit 27 "10/15 Mode Exhaust Emissions Test procedure for Diesel-Powered Motor Vehicles" in "Traffic Safety Nuisance Research Institute's Automobile Type Approval Test Standard" supervised by Ministry of Land, Infrastructure, and Transport Japan.

### (Vehicle Exhaust Gas Test, Fuel Consumption Test)

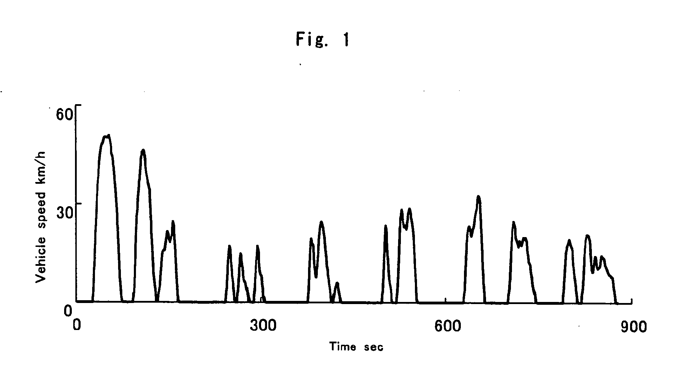

The fuel consumption of each of the gas oil compositions was measured using the following automobile equipped with a diesel powered engine (Vehicle 1). The test was carried out under the transient driving mode simulating actual running, shown in Fig. 1. With regard to fuel consumption, the volume flow of the fuel consumed during the test mode was fuel-temperature compensated and then converted to weight. Each of the results was then quantified by comparing it with the result of Comparative Example 1, which result was defined as 100.

### (Vehicle Specifications): Vehicle 1

Type of engine: in-line 4 cylinder diesel engine with an intercooled supercharger
Displacement: 3 L
Compression ratio: 18.5
Maximum power: 125 kW/3400 rpm
Maximum torque: 350 Nm/2400 rpm
Adopted regulation: 1997 Exhaust Gas Emission Regulation
Vehicle weight: 1900 kg
Transmission: 4-speed automatic transmission
Exhaust-gas post-processing system: oxidation catalyst

### (Calculation of life cycle CO₂)

Life cycle CO₂ was calculated separately as the CO₂ emitted as a result of combustion of the gas oil compositions in a vehicle equipped with a diesel-powered engine and as the CO₂ generated from oil-well drilling to pumping to a vehicle fuel tank.

The CO₂ emitted by combustion (hereinafter referred to as "Tank to Wheel CO₂" was calculated as the emissions per unit calorific value of each gas oil composition on the basis of CO₂ emissions, driving fuel efficiency, and fuel density when the above vehicle test was carried out.

The CO₂ generated from oil-well drilling to pumping to a vehicle fuel tank (hereinafter referred to as "Well to Tank CO₂") was calculated as the total CO₂ emissions during a sequence starting from the drilling of material and crude oil resources, through transportation, processing, and delivery, to pumping to a vehicle's gas tank. For calculation of "Well to Tank CO₂", the calculation was carried out in consideration of the carbon dioxide generated during the following (1B) to (5B) events. Data required for the calculation was the oil refinery operation performance date possessed by the inventors of the present invention.
(1B) Carbon dioxide emissions accompanied with the use of fuel for various processing devices and facilities such as boilers
(2B) Carbon dioxide emissions accompanied with reforming reaction in a hydrogen producing device in a processing using hydrogen
(3B) Carbon dioxide emissions accompanied with regeneration of a catalyst if the processing is carried out through a device such as a catalytic cracking device requiring continuous catalyst regeneration
(4B) Carbon dioxide emissions when a gas oil composition was produced or shipped at Yokohama, Japan, delivered therefrom to Sendai, Japan, and pumped into a vehicle there
(5B) Carbon dioxide emissions when an animal or vegetable fat and a component originating therefrom were obtained from Malaysia or regions therearound, and a gas oil composition was produced in Yokohama, Japan

If an animal or vegetable fat and a component originating therefrom-is used as fuel, a rule established in Kyoto Protocol that the carbon dioxide emissions resulting from combustion of such fuel is not counted is applied. This rule was thus applied to the above-described "Tank to Wheel CO₂" calculation.

Tables 6 shows the "Tank to Wheel CO₂" and "Well to Tank CO₂" emissions as calculated above as well as the total of these emissions, i.e., life cycle CO₂ emissions (LC). Each of the results is quantified by comparing it with the results of Comparative Example 1, the results of which was defined as 100.

### (Oxidation stability test)

The fuels were acceleratingly deteriorated at a temperature of 95°C under oxygen bubbling for 16 hours in accordance with ASTM D2274-94. The color of the fuels were observed before and after the test. If the color was changed, the fuel was evaluated as "poor". If the color was not changed, the fuel was evaluated as "good".

### (Test for evaluating the stability of each composition when mixed with engine oil)

Sample oils were prepared by mixing and stirring 0.1 L of each of the gas oils and 0.1 L of engine oil. The sample oils were each acceleratingly deteriorated at a temperature of 115°C under oxygen bubbling for 16 hours and then allowed to stand at ordinary temperature for 24 hours. Thereafter, the state of each sample was observed before and after the test. If impurities such as sludge were present in a sample and/or phase separation was observed, the sample was evaluated as "poor". If the state of a sample did not change, the sample was evaluated as "good". The engine oil used in this test was "ENEOS ECOTOURING" (CF-4, SAE 10W-30) manufactured by Nippon Oil Corporation.

### (Low temperature startability)

Using Vehicle 1, the gas oil compositions of all the Examples and Comparative Examples were subjected to a test for evaluating their low temperature startability. First of all, on a chassis dynamometer capable of controlling the environment temperature, the test was carried out at room temperature by (1) flashing (washing) the fuel system of a test diesel vehicle with a fuel to be evaluated; (2) draining out the flashing fuel; (3) replacing the main filter with new one; and (4) feeding the fuel tank with the fuel to be evaluated in a specific amount (1/2 of the tank volume of the test vehicle). The test was continued by (5) cooling rapidly the environment temperature from room temperature to 5°C; (6) keeping the temperature at 5°C for one hour; (7) cooling gradually at a rate of 1°C/h till reaching to the-pr-edetermined temperature (-7°C); and (8) starting the engine after the temperature was kept at the predetermined temperature for one hour. If the engine did not start even after 10 second cranking was repeated twice at an interval of 30 seconds, the fuel was evaluated as "poor". If the engine started while 10 second cranking was repeated twice at an interval of 30 seconds, the fuel was evaluated as "good".

**Table 2**

| | | Vacuum Gas Oil | Vegetable Fat 1 | Vegetable Fat 2 |
|---|---|---|---|---|
| Density (15°C) | kg/m³ | 918 | - | - |
| Kinematic Viscosity (100°C) | mm²/s | 6.1 | - | - |
| n-d-m | %CP | 57 | - | - |
| | %CN | 24 | - | - |
| | %CA | 17 | - | - |
| | RN | 1 | - | - |
| | RA | 1 | - | - |
| C mass% | | 85 | - | - |
| H mass% | | 11 | - | - |
| Nitorogen Content | mass ppm | 665 | - | - |
| Sulfer Content | mass% | 2.2 | <1 | <1 |
| Total Acid Number | mgKOH/g | - | 0.06 | 0.08 |
| | Butyric Acid Group | - | 0 | 0 |
| | Caproic Acid Group | - | 0 | 0 |
| | Caprylic Acid Group | - | 0 | 0 |
| | Capric Acid Group | - | 0 | 0 |
| Ratio of Fatty Acid Groups in Fat | Lauric Acid Group | - | 0 | 0 |
| | Myristic Acid Group | - | 1 | 0 |
| mass% | Palmitic Acid Group | - | 44 | 6 |
| | Stearic Acid Group | - | 4 | 3 |
| | Oleic Acid Group | - | 39 | 42 |
| | Linoleic Acid Group | - | 11 | 39 |
| | Linolenic Acid Group | - | 0 | 9 |

**Table3**

| Catalyst | Supported metal: Ni-Mo/ Support: alumina |
|---|---|
| Reaction Temperature °C | 280 |
| Hydrogen Partial Pressure MPa | 10 |
| LHSV h⁻¹ | 0.5 |
| Hydrogen/Oil Ratio NL/L | 510 |

**Table 4**

| | | HDO Treated Vegetable Fat 1 | HDO Treated Vegetable Fat 2 | HDO Treated Mixed Oil of Vacuum Gas Oil and Vegetable Fat 1 | Vegetable Fat 1 Methyl Ester | Vegetable Fat 2 Methyl Ester | Hydrorefined Oil |
|---|---|---|---|---|---|---|---|
| Density | (15°C) kg/m² | 775 | 783 | 835 | 874 | 883 | 823 |
| Kinematic Viscosity | (30°C) mm²/s | 2.9 | 3.6 | 4.3 | 5.1 | 5.6 | 3.6 |
| Distillation Characteristics °C | 10% Distillation Temperature | 248.0 | 259.0 | 253.0 | 335.0 | 338.0 | 191.0 |
| | 50% Distillation Temperature | 269.5 | 277.0 | 278.5 | 354.0 | 355.0 | 268.5 |
| | 90% Distillation Temperature | 301.0 | 304.0 | 304.0 | 359.0 | 363.0 | 334.0 |
| Aromatic Content Vol. % | Total Aromatic Content | <1 | <1 | 12.2 | - | - | 17.9 |
| | Content of Mono-aromatic Hydrocarbons | <1 | <1 | 10.1 | - | - | 16.2 |
| Cetane Number | | 78 | 73 | 65 | 52 | 54 | 56 |
| Sulfer Content | mass ppm | <1 | <1 | <1 | <1 | <1 | 5 |
| Oxygen Content | mass% | <1 | <1 | <1 | 11.8 | 11.4 | <1 |
| Water Content | ppm | 35 | 45 | 29 | 320 | 520 | 25 |
| Chain saturated hydrocarbon mass% | C14 or fewer | 1.0 | 1.0 | 0.2 | 0.0 | 0.0 | 15.3 |
| | C15 - C18 | 99.0 | 99.0 | 19.8 | 0.0 | 0.0 | 18.2 |
| | C19 or more | 0.0 | 0.0 | 0.0 | 0.0 | 0.0 | 9.5 |
| Fatty acid alkyl ester | mass% | <1 | <1 | <1 | 98.0 | 96.0 | <1 |
| Free fatty acid | mass% | <1 | <1 | <1 | 0.4 | 1.1 | <1 |
| Na, K. Ca, Mg | mass ppm | <1 | <1 | <1 | 3 | 11 | <1 |
| Total Acid Number | mgKOH/g | 0.01 | 0.01 | 0.01 | 0.32 | 0.82 | 0.01 |

**Table 5**

| | | Examples | | | | Comparative Examples | | | |
|---|---|---|---|---|---|---|---|---|---|
| | | 1 | 2 | 3 | 4 | 1 | 2 | 3 | 4 |
| Hydrorefined oil | | | | | 80 | 100 | | | 80 |
| HDO treated vegetable fat 1 | | 100 | | | 20 | | | | |
| HDO treated vegetable fat 2 | | | 100 | | | | | | |
| HDO Treated Mixed Oil of Vacuum Gas Oil and Vegetable Fat 1 | | | | 100 | | | | | |
| Methyl-esterified product of vegetable fat 1 | | | | | | | 100 | | 20 |
| Methyl-esterified product of vegetable fat 2 | | | | | | | | 100 | |
| Density (15°C) | kg/m³ | 775 | 783 | 835 | 813 | 823 | 874 | 883 | 833 |
| Kinematic Viscosity (30°C) | mm²/s | 2.9 | 3.6 | 4.3 | 3.4 | 3.6 | 5.1 | 5.6 | 3.9 |
| Flash Point | °C | 95 | 101 | 88 | 77 | 72 | 182 | 175 | 74 |
| Sulfer Content | mass ppm | <1 | <1 | <1 | 3 | 4 | <1 | <1 | 3 |
| Oxygen Content | mass % | <0.1 | <0.1 | <0.1 | <0.1 | <0.1 | 11.8 | 11.4 | 2.4 |
| Distillation Characteristics °C | 10% Distillation Temperature | 248.0 | 259.0 | 253.0 | 193.0 | 191.0 | 335.0 | 338.0 | 195.0 |
| | 50% Distillation Temperature | 269.5 | 277.0 | 278.5 | 271.0 | 268.5 | 354.0 | 355.0 | 289.0 |
| | 90% Distillation Temperature | 301.0 | 304.0 | 304.0 | 319.5 | 334.0 | 359.0 | 363.0 | 336.0 |
| Chain saturated hydrocarbon content mass% | C14 or fewer | 1.0 | 1.0 | 6.4 | 12.4 | 15.3 | - | - | 12.2 |
| | C15-C18 | 99.0 | 99.0 | 50.2 | 34.4 | 18.2 | - | - | 14.6 |
| | C19 or more | 0.0 | 0.0 | 8.7 | 7.6 | 9.5 | - | - | 7.6 |
| | 2 × C14 or fewer | 2.0 | 2.0 | 12.9 | 24.9 | 30.6 | - | - | 24.5 |
| | 3 × C19 or greater | 0.0 | 0.0 | 26.0 | 22.8 | 28.5 | - | - | 22.8 |
| Cetane Number | | 78 | 73 | 65 | 62 | 56 | 52 | 54 | 55 |
| Cetane Index | | 91 | 89 | 58 | 62 | 56 | 63 | 60 | 56 |
| Aromatic content | Vol. % | <0.1 | <0.1 | 12.2 | 14.3 | 17.9 | - | - | 14.3 |
| Carbon Residue Content of 10% Distillation Residue | mass % | 0.01 | 0.01 | 0.03 | 0.02 | 0.02 | 0.03 | 0.02 | 0.02 |
| Ash Content | mass % | <0.01 | <0.01 | <0.01 | <0.01 | <0.01 | <0.01 | <0.01 | <0.01 |
| Water Content | mass ppm | 35 | 30 | 52 | 35 | 25 | 320 | 520 | 84 |
| Total Insoluble Content | mg/100 ml | 0.1 | 0.1 | 0.2 | 0.1 | 0.1 | 0.5 | 2.9 | 0.2 |
| Peroxide Number | mass ppm | 1 | 1 | 2 | 4 | 19 | 53 | 68 | 23 |
| Total Acid Number | mgKOH/g | 0.01 | 0.01 | 0.01 | 0.01 | 0.01 | 0.32 | 0.82 | 0.07 |
| Conductivity | pS/m | 107 | 124 | 131 | 92 | 97 | 108 | 102 | 99 |
| Wear Scar Diameter (WS 1.4) | µm | 390 | 350 | 390 | 360 | 430 | 170 | 160 | 340 |
| Lubricity Improver | mass ppm | 100 | 100 | 100 | 100 | 100 | - | - | - |
| Cold Flow Improver | mass ppm | - | - | - | 200 | - | - | - | - |
| Detergent | mass ppm | - | - | - | 150 | - | - | - | - |

**Table 6**

| | | Examples | | | | Comparative Examples | | | |
|---|---|---|---|---|---|---|---|---|---|
| | | 1 | 2 | 3 | 4 | 1 | 2 | 3 | 4 |
| | Well to Tank | 12.7 | 12.8 | 7.6 | 6.9 | 5.1 | 20.5 | 20.7 | 8.2 |
| CO₂ Emissions | Tank to Wheel | (70.4) | (70.5) | 58.4 | 58.2 | 73.0 | (78.1) | (78.7) | 58.4 |
| gCO₂/MJ | Well to Wheel | 12.7 | 12.8 | 66.0 | 65.2 | 78.1 | 20.5 | 20.7 | 66.6 |
| | WtW relative value | 17 | 18 | 90 | 89 | 100 | 26 | 27 | 85 |
| Fuel consumption | | 98 | 99 | 98 | 98 | 100 | 104 | 105 | 100 |
| Stability when mixed with engine oil | | good | good | good | good | good | poor | poor | poor |
| Oxidation stability | | good | good | good | good | good | poor | poor | poor |

**Table7**

| Catalyst | Hydrorefining | Supported metal: Ni-Mo/ Support alumina |
|---|---|---|
| | Isomerization | Supported metal: Pt-Pd/ Support: zeolite |
| Reaction Temperature °C | | 320 |
| Hydrogen Partial Pressure MPa | | 6 |
| LHSV h⁻¹ | | 1.0 |
| Hydrogen/Oil Ratio NL/L | | 500 |

**Table 8**

| | | HDO Treated Vegetable Fat 1 | HDO Treated Vegetable Fat 2 | HDO Treated Mixed Oil of Vacuum Gas Oil and Vegetable Fat 1 | Vegetable Fat 1 Methyl Ester | Vegetable Fat 2 Methyl Ester | Hydrorefined Oil |
|---|---|---|---|---|---|---|---|
| Density | (15°C) kg/m³ | 781 | 789 | 837 | 874 | 883 | 823 |
| Kinematic Viscosity | (30°C) mm²/s | 3.4 | 3.8 | 4.4 | 5.1 | 5.6 | 3.6 |
| Distillation Characteristics °C | 10% Distillation Temperature | 245.0 | 258.0 | 230.5 | 335.0 | 338.0 | 191.0 |
| | 50% Distillation Temperature | 267.0 | 276.5 | 269.0 | 354.0 | 355.0 | 268.5 |
| | 90%Distillation Temperature | 299.0 | 303.5 | 302.5 | 359.0 | 363.0 | 334.0 |
| Aromatic Content Vol. % | Total Aromatic Content | <1 | <1 | 11.0 | - | - | 17.9 |
| | Content of Mono-aromatic Hydrocarbons | <1 | <1 | 10.0 | - | - | 16.2 |
| Cetane Number | | 56 | 58 | 63 | 52 | 54 | 56 |
| Sulfer Content | mass ppm | <1 | <1 | <1 | <1 | <1 | 4 |
| Oxygen Content | mass% | <0.1 | <0.1 | <0.1 | 11.8 | 11.4 | <0.1 |
| Water Content | ppm | 25 | 40 | 26 | 320 | 520 | 25 |
| Chain saturated hydrocarbon content mass% | C14 or fewer | 1.0 | 1.0 | 7.0 | - | - | 15.3 |
| | C15 - C18 | 99.0 | 99.0 | 51.1 | - | - | 18.2 |
| | C19 or more | 0.0 | 0.0 | 7.9 | - | - | 9.5 |
| | A: iP of C15 or more | 64.0 | 62.1 | 24.6 | - | - | 10.6 |
| | B: nP of C15 or more | 35.0 | 36.9 | 24.4 | - | - | 17.1 |
| | A/B | 1.8 | 1.7 | 1.0 | - | - | 0.6 |
| Fatty acid alkyl ester | mass% | <1 | <1 | <1 | 98.0 | 96.0 | <1 |
| Free fatty acid | mass% | <1 | <1 | <1 | 0.4 | 1.1 | <1 |
| Na, K, Ca, Mg | mass ppm | <1 | <1 | <1 | 3 | 11 | <1 |
| Total Acid Number | mgKOH/g | 0.01 | 0.01 | 0.01 | 0.32 | 0.82 | 0.01 |

**Table 9**

| | | Examples | | | | Comparative Examples | | | |
|---|---|---|---|---|---|---|---|---|---|
| | | 5 | 6 | 7 | 8 | 1 | 2 | 3 | 4 |
| Hydrorefined oil | | | | | 80 | 100 | | | 80 |
| HDO treated vegetable fat 1 | | 100 | | | 20 | | | | |
| HDO treated vegetable fat 2 | | | 100 | | | | | | |
| HDO Treated Mixed Oil of Vacuum Gas Oil and Vegetable Fat 1 | | | | 100 | | | | | |
| Methyl-esterified product of vegetable fat 1 | | | | | | | 100 | | 20 |
| Methyl-esterified product of vegetable fat 2 | | | | | | | | 100 | |
| Density (15°C) | kg/m³ | 781 | 789 | 837 | 815 | 823 | 874 | 883 | 833 |
| Kinematic Viscosity (30°C) | mm²/s | 3.4 | 3.8 | 4.4 | 3.6 | 3.6 | 5.1 | 5.6 | 3.9 |
| Flash Point | °C | 94 | 99 | 87 | 73 | 72 | 182 | 175 | 74 |
| Sulfer Content | mass ppm | <1 | <1 | <1 | 3 | 4 | <1 | <1 | 3 |
| Oxygen Content | mass % | <0.1 | <0.1 | <0.1 | <0.1 | <0.1 | 11.8 | 11.4 | 2.4 |
| Distillation Characteristics °C | 10% Distillation Temperature | 245.0 | 258.0 | 230.5 | 194.5 | 191.0 | 335.0 | 338.0 | 195.0 |
| | 50% Distillation Temperature | 267.0 | 276.5 | 269.0 | 269.0 | 268.5 | 354.0 | 355.0 | 289.0 |
| | 90% Distillation Temperature | 299.0 | 303.5 | 302.5 | 323.0 | 334.0 | 359.0 | 363.0 | 336.0 |
| Chain saturated hydrocarbon content mass% | C14 or fewer | 1.0 | 1.0 | 7.0 | 12.4 | 15.3 | - | - | 12.2 |
| | C15-C18 | 99.0 | 99.0 | 51.1 | 34.4 | 18.2 | - | - | 14.6 |
| | C19 or more | 0.0 | 0.0 | 7.9 | 7.6 | 9.5 | - | - | 7.6 |
| | 2 × C14 or fewer | 2.0 | 2.0 | 14.0 | 24.9 | 30.6 | - | - | 24.5 |
| | 3 × C19 or greater | 0.0 | 0.0 | 23.7 | 22.8 | 28.5 | - | - | 22.8 |
| | A: iP of C15 or more | 64.0 | 62.1 | 24.6 | 21.3 | 10.6 | - | - | 8.5 |
| | B: nP of C15 or more | 35.0 | 36.9 | 24.4 | 20.7 | 17.1 | - | - | 13.7 |
| | A/B | 1.8 | 1.7 | 1.0 | 1.0 | 0.6 | - | - | 0.6 |
| Cetane Number | | 56 | 58 | 63 | 56 | 56 | 52 | 54 | 55 |
| Cetane Index | | 85 | 85 | 53 | 61 | 56 | 63 | 60 | 56 |
| Cloud Point | °C | -7 | -4 | -5 | -5 | -4 | 13 | -4 | 4 |
| CFPP | °C | -7 | -6 | -6 | -12 | -4 | 13 | -5 | 4 |
| Pour Point | °C | -7.5 | -7.5 | -7.5 | -15.0 | -5.0 | 15.0 | -7.5 | 2.5 |
| Aromatic content | Vol. % | <0.1 | <0.1 | 11.0 | 14.3 | 17.9 | - | - | 14.3 |
| Carbon Residue Content of 10% Distillation Residue | mass % | 0.01 | 0.01 | 0.03 | 0.02 | 0.02 | 0.03 | 0.02 | 0.02 |
| Ash Content | mass % | <0.01 | <0.01 | <0.01 | <0.01 | <0.01 | <0.01 | <0.01 | <0.01 |
| Water Content | mass ppm | 25 | 40 | 26 | 25 | 25 | 320 | 520 | 84 |
| Total Insoluble Content | mg/100 ml | 0.1 | 0.1 | 0.2 | 0.1 | 0.1 | 0.5 | 2.9 | 0.2 |
| Peroxide Number | mass ppm | 2 | 1 | 2 | 9 | 19 | 53 | 68 | 23 |
| Total Acid Number | mgKOH/g | 0.01 | 0.01 | 0.01 | 0.01 | 0.01 | 0.32 | 0.82 | 0.07 |
| Conductivity | pS/m | 98 | 121 | 97 | 92 | 97 | 108 | 102 | 99 |
| Wear Scar Diameter (WS 1.4) | µm | 380 | 360 | 390 | 360 | 430 | 170 | 160 | 340 |
| Lubricity Improver | mass ppm | 100 | 100 | 100 | 100 | 100 | - | - | - |
| Cold Flow Improver | mass ppm | - | - | - | 200 | - | - | - | - |
| Detergent | mass ppm | - | - | - | 150 | - | - | - | - |

**Table 10**

| | | Examples | | | | Comparative Examples | | | |
|---|---|---|---|---|---|---|---|---|---|
| | | 5 | 6 | 7 | 8 | 1 | 2 | 3 | 4 |
| CO₂ Emissions gCO₂/MJ | Well to Tank | 12.9 | 13.0 | 7.7 | 6.7 | 5.1 | 20.5 | 20.7 | 8.2 |
| | Tank to Wheel | (70.4) | (70.5) | 58.4 | 58.4 | 73.0 | (78.1) | (78.7) | 58.4 |
| | Well to Wheel | 12.9 | 13.0 | 66.1 | 65.1 | 78.1 | 20.5 | 20.7 | 66.6 |
| | WtW relative value | 17 | 17 | 85 | 83 | 100 | 26 | 27 | 85 |
| Fuel consumption | | 99 | 98 | 98 | 98 | 100 | 104 | 105 | 100 |
| Stability when mixed with engine oil | | good | good | good | good | good | poor | poor | poor |
| Oxidation stability | | good | good | good | good | good | poor | poor | poor |
| Low temperature startability (-5°C) | | good | good | good | good | poor | poor | poor | poor |

### [Brief Description of the Drawing]

Fig. 1 shows transient driving mode simulating actual running in the vehicle exhaust gas test and fuel consumption test.

## Claims

1. A gas oil composition comprising an environment friendly base gas oil that is a hydrocarbon-containing mixed fraction comprising 50 percent by mass or more of chain saturated hydrocarbons having 15 to 18 carbon atoms produced by contacting a feedstock containing an animal or vegetable fat and/or a component originating therefrom, with a hydrorefining catalyst containing at least one or more metals selected from the group consisting of the Groups 6A and 8 metals of the periodic table and an inorganic oxide with acidic properties, under hydrogen pressure, the base gas oil having a fatty acid alkyl ester content of 1 percent by mass or less, a free fatty acid content of 1 percent by mass or less, a total content of the metals that are sodium, potassium, calcium and magnesium of 10 ppm by mass or less, a sulfur content of 3 ppm by mass or less, an oxygen content of 1 percent by mass or less and a water content of 500 ppm by mass or less, the composition having a sulfur content of 5 ppm by mass or less, an oxygen content of 0.5 percent by mass or less, a cetane number of 55 or greater, a peroxide number after an accelerated oxidation test of 50 ppm by mass or less and satisfying the requirements defined by the following formulas:
(Formula 1) the content of the chain saturated hydrocarbons having 15 to 18 carbon atoms > 2 x the content of the chain saturated hydrocarbons having 14 or fewer carbon atoms; and
(Formula 2) the content of the chain saturated hydrocarbons having 15 to 18 carbon atoms > 3 x the content of the chain saturated hydrocarbons having 19 or more carbon atoms.

2. A gas oil composition comprising an environment friendly base gas oil that is a hydrocarbon-containing mixed fraction comprising 50 percent by mass or more of chain saturated hydrocarbons having 15 to 18 carbon atoms produced by contacting a feedstock containing an animal or vegetable fat and/or a component originating therefrom, with a hydrorefining catalyst containing at least one or more metals selected from the group consisting of the Groups 6A and 8 metals of the periodic table and an inorganic oxide with acidic properties, under hydrogen pressure and simultaneously therewith or thereafter with an isomerization catalyst containing at least one or more metals selected from the Groups 6A and 8 metals of the periodic table, supported on a support containing crystalline molecular sieve, under hydrogen pressure, the base gas oil having a fatty acid alkyl ester content of 1 percent by mass or less, a free fatty acid content of 1 percent by mass or less, a total content of the metals that are sodium, potassium, calcium and magnesium of 10 ppm by mass or less, a sulfur content of 3 ppm by mass or less, an oxygen content of 1 percent by mass or less and a water content of 500 ppm by mass or less, the composition having a sulfur content of 5 ppm by mass or less, an oxygen content of 0.5 percent by mass or less, a cetane number of 55 or greater, a peroxide number after an accelerated oxidation test of 50 ppm by mass or less and satisfying the requirements defined by the following formulas:
(Formula 1) the content of the chain saturated hydrocarbons having 15 to 18 carbon atoms > 2 x the content of the chain saturated hydrocarbons having 14 or fewer carbon atoms; and
(Formula 2) the content of the chain saturated hydrocarbons having 15 to 18 carbon atoms > 3 x the content of the chain saturated hydrocarbons having 19 or more carbon atoms.

3. The gas oil composition according to claim 2, wherein the composition is preferably 0.7 or greater in a value obtained by dividing the content of the chain saturated hydrocarbons with a side chain having 15 or more carbon atoms by the content of the straight-chain saturated hydrocarbons having 15 or more carbon atoms.

4. The gas oil composition according to claim 1 or 2, wherein the composition has a cloud point of 0°C or lower and a kinematic viscosity at 30°C of 2 mm²/s or greater and 5 mm²/s or less.

5. The gas oil composition according to claim 1 or 2 wherein the composition has an aromatic content of 15 percent by mass or less and a 90% distillation temperature of distillation characteristics of 280°C or higher and 350°C or lower.

6. The gas oil composition according to any of claims 1 to 5 wherein the composition is produced by treating the feedstock where the animal or vegetable fat and/or a component originating therefrom contain mainly glyceride having fatty acid groups such as oleic acid and linoleic acid groups, in a total amount of 40 percent by mass or more.

7. The gas oil composition according to any of claims 1 to 5 wherein the composition is produced by treating the feedstock where the animal or vegetable fat and/or a component originating therefrom contain mainly glyceride having fatty acid groups such as oleic acid, linoleic acid and palmitic acid groups, in a total amount of 80 percent by mass or more.
